# EUROPÄISCHE PATENTSCHRIFT

(11) **EP 2 922 903 B1**
(45) Veröffentlichungstag und Bekanntmachung des Hinweises auf die Patenterteilung: **26.09.2018**
(21) Anmeldenummer: 13789829.2
(22) Anmeldetag: 15.11.2013
(51) Int. Cl.: C08J 9/30, C08J 9/14, C08J 9/00, C04B 38/10, C08L 9/08, C08K 3/34, C04B 26/04, C04B 28/26

(54) **SCHAUMZUSAMMENSETZUNG FÜR BAUZWECKE**
FOAM COMPOSITION FOR CONSTRUCTION USE
COMPOSITION DE MOUSSE POUR LE BÂTIMENT

(30) Priorität: 20.11.2012 DE 202012104490 U
(43) Veröffentlichungstag der Anmeldung: 30.09.2015
(73) Patentinhaber: Tremco Illbruck Productie B.V., 4241 WC Arkel (NL)
(72) Erfinder: SCHOOTSTRA, Siebe, NL-4207 CJ Gorinchem (NL); VAN HERPEN, Goslin, NL-3371 CX Hardingxveld-Giessendam (NL)
(74) Vertreter: Lippert Stachow Patentanwälte Rechtsanwälte
(86) Internationale Anmeldenummer: PCT/EP2013/073936
(87) Internationale Veröffentlichungsnummer: WO 2014/079780

(56) Entgegenhaltungen:
- DE-A1- 1 494 955
- US-A- 4 559 369

## Beschreibung

Die Erfindung betrifft eine Schaumzusammensetzung für Bauzwecke, insbesondere zum Füllen von Fugen oder zum Verbinden von Bauteilen, enthaltend eine schäumbare wässrige Phase und ein Treibmittel, wobei die schäumbare wässrige Phase mindestens ein organisches Polymer und anorganische Bestandteile umfasst, wobei das organische Polymer bezogen auf dessen Trockensubstanz in der wässrigen Phase in einem Gehalt von ≥ 3 Gew.-% enthalten ist, wobei das organische Polymer ein filmbildendes organisches Polymer ist, und wobei das organische Polymer in Form einer Dispersion oder wässrigen Lösung vorliegt.

Derartige Schäume für Bauzwecke, hergestellt durch Verschäumen der Schaumzusammensetzung, müssen insgesamt ein komplexes Anforderungsprofil erfüllen. So müssen diese zum Füllen von Fugen eine ausreichende Schaumstabilität aufweisen. Weiterhin müssen derartige Schäume im frisch geschäumten Zustand eine ausreichend zähe Konsistenz aufweisen, so dass sie vor Aushärtung in der Fuge nicht zusammenfallen oder in einer vertikalen Fuge oder Deckenfuge absacken und im Falle von Klebeschäumen eine zusammenhängende Kleberaupe ausbilden. Um die jeweilige Fuge bautechnisch zuverlässig auszufüllen, soll der Schaum zudem ein allenfalls geringes Schrumpfverhalten bei der Aushärtung aufweisen. Weiterhin sollen derartige Schäume eine besonders gute Haftung an dem jeweiligen Untergrund, zumeist einem mineralischen Baumaterial wie Kalksandstein oder Beton oder aber auch einem Kunststoffmaterial oder dergleichen aufweisen, um bei Ausfüllen einer Fuge oder Verklebung von Bauteilen eine dauerhafte Verbindung mit dem jeweiligen Bauwerksmaterial zu ergeben. Weiterhin muss die Abbindezeit derartiger Schäume ausreichend schnell sein, damit diese, falls der Schaum eine gewisse Neigung zum Zusammenfallen aufweist, die jeweilige Fuge noch ausreichend ausfüllen und/oder die Verarbeitungszeit ausreichend kurz ist. Andererseits sollte der Schaum nicht zu schnell abbinden, da dies sonst in nachteiliger Weise mit der Gefahr von Rissen in dem ausgehärteten Schaum und/oder nicht ausreichend schneller Abführung von Feuchtigkeit aus dem Schaum nach außen während dessen Trocknung verbunden wäre, was wiederum nachteilig ist. Weiterhin sollte der Schaum noch eine gewisse Flexibilität aufweisen, so dass dieser insbesondere bei Anwendung als Fugenschaum bei einer Bewegung der die Fuge bildenden Bauteile zueinander nicht rissig wird. Schließlich sollte der Schaum ökologischen Gesichtspunkten Rechnung tragen, also beispielsweise die Schaumzusammensetzung (auch vor dem Schäumen) einen möglichst geringen Anteil gesundheitsbedenklicher und/oder umweltschädlicher Komponenten wie bspw. Isocyanaten aufweisen, so dass Restmengen des Schaums auch ohne besonderen Aufwand, z.B. ohne Sondermüllbehandlung, entsorgt werden können.

Ferner soll die Schaumzusammensetzung zur Ausbringung als Dosenschaum geeignet sein, also für eine Ausbringung ohne größeren apparativen Aufwand vor Ort durch manuelle Handhabung einer treibgasbefüllten Dose.

Ferner soll die Schaumzusammensetzung mit Treibgas im Behälter bzw. einer Dose abgefüllt nach Möglichkeit eine hohe Lagerstabilität aufweisen, insbesondere auch als Einkomponentenschaum.

Dieses komplexe Anforderungsprofil wird durch bisher bekannte Schäume für Bauzwecke zumeist nur teilweise unzureichend erfüllt.

So ist beispielsweise aus der EP 2 064 298 A1 ein Klebeschaum bekannt, welcher als zusammenfallender Schaum ausgebildet ist. Dieser PU-Dosenschaum enthält jedoch freie Isocyanate, welche gesundheitlich bedenklich sind, insbesondere bei Berührung mit menschlicher Haut.

Verschiedentlich werden Alkalisilikatlösungen als Schaumkomponente eingesetzt, da diese umweltfreundlich sind. So ist aus der EP 922834 A2 ein Dichtschaum bekannt, welcher zur Abdichtung unterirdischer Bereiche einsetzbar ist. Dieser Schaum enthält neben einer Alkalimetallsilikatlösung vernetzte Polyacrylat-Polymere als Geliermittel in geringen Gehalten, um die Viskosität der Zusammensetzung einzustellen.

Weiterhin sind Schäume enthaltend Silikate und organische Polymere zur werkseitigen Fertigung von Bauplatten aus der US 2009/0239429 bekannt, wobei als Polymer Vinylacetat eingesetzt wird. Allerdings werden hier halbharte Schäume oder Hartschäume eingesetzt, um Bauplatten mit hoher Schalldämmung zu erzeugen. Schäume in derartigen industriellen Fertigungsprozessen müssen jedoch andere Eigenschaftsprofile aufweisen, als Bauschäume zum Ausfüllen von Fugen, Verbinden von Bauteilen oder dergleichen, insbesondere was auch deren Aushärtungszeit in Kombination mit der gegebenen Schaumstabilität, Haftung an dem jeweiligen Bauteil und dergleichen betrifft.

Aus der WO 2001/70647 A1 ist bekannt, Schäume zur Herstellung von Formkörpern in Hohlformen einzusetzen, wobei die schäumbare wässrige Phase eine hydraulisch abbildende anorganische Komponente wie Portlandzement sowie organische teilchenförmige Füllstoffe umfasst. Das Zementmaterial liegt in pulverförmigem Zustand fein verteilt in der Schaumzusammensetzung vor. Alkalimetallsilikatlösung kann als Geliermittel zur Einstellung der Viskosität eingesetzt werden. Da das hydraulisch abbindende anorganische Material jedoch vergleichsweise schnell aushärtet können hierdurch lediglich Schäume hergestellt werden, deren Härte bzw. Elastizität nur in vergleichsweise geringen Bereichen variieren und bei welchen eine Bearbeitung des noch nicht ausgehärteten geschäumten Materials, beispielsweise zur Vergleichmäßigung einer Fugenfüllung oder Herstellung einer gleichmäßigen Oberfläche des Schaumes, nur bedingt durchführbar ist. Zwar können diese Schäume nach Aushärtung mit einem Werkzeug wie einem Messer durchtrennt werden, um eine gleichmäßige Oberfläche zu erzielen und überschüssigen Schaum zu entfernen, hierdurch wird jedoch die Oberfläche des geschäumten Materials zerstört oder nachteilig beeinflusst. Diese Schaumzusammensetzungen sind für industrielle Fertigungsverfahren angepasst und als Dosenschaum nicht geeignet.

Die US 4,559,369 beschreibt eine Zusammensetzung zur Herstellung offenzelliger, elastomerer Silicon-Schäume enthaltend dispergierte Silicone in Form von Propfpolymeren aus endgruppenblockierten Polydiorganosiloxanen mit Hydroxylgruppen und Alkalimetallsilikaten.

Der Erfindung liegt die Aufgabe zugrunde, einen Schaum bzw. eine Schaumzusammensetzung bereitzustellen, welche(r) insbesondere als Bauschaum zum Füllen von Fugen und/oder zum Verkleben von Bauteilen vor Ort einsetzbar ist, welche(r) eine sehr gute Haftung zu dem jeweiligen Untergrund aufweist und in der Fuge eingebracht vor dessen Aushärtung bearbeitbar ist, z.B. durch Glättung des Fugenschaumes, und welche(r) als Dosenschaum, vorzugsweise einkomponentiger Dosenschaum, ausbringbar ist.

Die Aufgabe wird durch eine Schaumzusammensetzung nach Anspruch 1 gelöst, bei welcher die anorganischen Bestandteile ein in der wässrigen Phase chemisch gelöstes Silikat , dessen Lösung filmbildend ist, umfassen, das wasserlösliche Silikat bezogen auf dessen Trockensubstanz in der wässrigen Phase in einem Gehalt von ≥ 3 Gew.-% enthalten ist, das organische filmbildende Polymer beim Verschäumen mit der Silikatlösung zusammen einen Silikat-Polymer-Schaum ergibt, das organische filmbildende Polymer und das wasserlösliche Silikat, jeweils bezogen auf deren Trockensubstanz, in der wässrigen Phase in einem Gewichtsverhältnis von 8:1 bis 1,75:1 enthalten sind, und der Gesamtgehalt an organischem filmbildendem Polymer und wasserlöslichem Silikat in der wässrigen Phase ≥ 20 Gew.-% und ≤ 75 Gew.-% beträgt.

Bei dem erfindungsgemäßen Schaum stellen somit das filmbildende organische Polymer und das wasserlösliche Silikat (bzw. die wässrige Silikatlösung, bspw. als Wasserglas) die wesentlichen oder einzigen Komponenten dar, welche filmbildend die Zellwände der Schaumstruktur ausbilden, also für die Festigkeit und/oder Elastizität des Schaumes sowohl im nicht-ausgehärteten Zustand (unmittelbar nach dem Schäumungsvorgang) und/oder nach dessen Aushärtung, vorzugsweise vollständiger Aushärtung, maßgeblich sind. Sowohl das in gelöster Form vorliegende Silikat als auch das organische Polymer sind hierbei jeweils für sich und insbesondere in Kombination miteinander filmbildende Komponenten. Nach dem Ausbreiten der Polymerdispersion oder Polymerlösung auf einer Substratoberfläche und Trocknen entsteht somit ein zusammenhängender Polymerfilm. Da das organische Polymer in der wässrigen Phase dispergiert oder gelöst vorliegt, liegt es also (unter den gewählten Bedingungen) auch in der wässrigen Silikatlösung dispergiert bzw. gelöst vor.

Die Angabe "≥ x-y" (mit x,y jeweils zwei verschiedenen Zahlen), bspw. in Bezug auf die Größe Gew.-% oder Vol.-%, ohne hierauf beschränkt zu sein, umfasst generell jeweils auch die Angaben "≥ x" und "≥ y", unabhängig voneinander.

Die Angabe "≤ x-y" (mit x,y jeweils zwei verschiedenen Zahlen), bspw. in Bezug auf die Größe Gew.-% oder Vol.-%, ohne hierauf beschränkt zu sein, umfasst generell jeweils auch auch die Angaben "≤ x" und "≤ y", unabhängig voneinander.

Die erfindungsgemäße Zusammensetzung ist besonders angepasst, um bei Raumtemperatur (23°C) und Normaldruck (1013 hPa) sowie normaler Luftfeuchtigkeit, z.B. 50% relative Luftfeuchtigkeit, auszuhärten. Die Aushärtung erfolgt durch bzw. unter Wasserverlust der Zusammensetzung. Für die Aushärtung sind keine weiteren Mittel wie Härter, Strahlung (z.B. UV- oder IR-Strahlung) oder dergleichen erforderlich. Gegebenenfalls kann die Aushärtung durch Trocknung und Wasserverlust der Zusammensetzung bei Raumtemperatur und Normaldruck auch bei anderen Luftfeuchtigkeiten erfolgen, bspw. im Bereich von 0-80% oder bis 90% oder bis 95% relativer Luftfeuchtigkeit, oder ggf. auch bei höheren Luftfeuchtigkeiten. Die Aushärtung kann auch insbesondere im Temperaturbereich von 10-35°C erfolgen, ohne hierauf beschränkt zu sein.

Die Eigenschaften des Schaumes im unmittelbar geschäumten Zustand (frischer Schaum) als auch im ausgehärteten Zustand können somit auch durch Variation des Gewichtsverhältnisses des organischen Polymers zu dem wasserlöslichen Silikat (Trockensubstanzgehalt) in weiten Bereichen variiert werden, so dass durch diese Zusammensetzung einerseits flexible Weichschäume, andererseits Hartschäume oder aber auch halbharte Schäume erzeugbar sind.

Das in der wässrigen Phase gelöste Silikat ist hierbei ein Bestandteil mit filmbildenden Eigenschaften, beispielsweise im Unterschied zu wasserunlöslichen Silikaten, welche lediglich Füllstoffe darstellen, bspw. in Form fein dispergierter Feststoffe. Gleichzeitig wird durch das wasserlösliche Silikat auch die Konsistenz des frischen Schaumes bzw. die Viskosität der die Zellwände ausbildenden Flüssigphase eingestellt.

Die erfindungsgemäße Schaumzusammensetzung zeichnet sich insbesondere durch gute Homogenisierbarkeit mittels Schütteln einer Schaumdose und gute Schaumstabilität aus.

Insbesondere kann das organische Polymer als Dispersion vorliegen, was allgemein im Rahmen der Erfindung gelten kann. Besonders bevorzugt umfasst das filmbildende organische Polymer ein Elastomer oder besteht zumindest überwiegend oder vollständig aus Elastomeren oder es liegen in der wässrigen Phase zumindest ein oder mehrere Polymerprecursoren vor, welche nach Ausbildung des Schaumes, insbesondere während dessen Aushärtung und/oder Trocknung, ein Elastomer ausbilden. Derartige Precursoren können beispielsweise Oligomere sein, welche zur Kettenverlängerung geeignete funktionelle Gruppen aufweisen, um durch Kettenverlängerung ein elastomeres Polymer zu bilden. Derartige funktionelle Gruppen können beispielsweise unter Kondensations- oder Additionsreaktionen miteinander reagieren, beispielsweise unter Ausbildung von Ester, Amid oder Ethergruppen. Derartige Precursoren sind allgemein bekannt. Dadurch, dass das organische Polymer bzw. zumindest eines der organischen Polymere als Elastomer ausgebildet ist (bzw. aus Precursoren nach dem Verschäumen ein Elastomer ausbildet wird), kann der ausgehärtete Schaum eine besonders hohe Elastizität bzw. Dehnbarkeit aufweisen, gegebenenfalls bei bereits vergleichsweise geringen Anteilen der elastomeren Polymerbestandteile bzw. deren Precursoren. Der getrocknete Polymerfilm stellt somit vorzugsweise einen Elastomerfilm bzw. Film mit elastomeren Bereichen, welche über die Filmausdehnung sich durchgehend erstrecken können, dar. In Kombination mit dem wasserlöslichen Silikat können hierdurch besondere Eigenschaften des Schaumes erzielt bzw. eingestellt werden, insbesondere ist dieser zugleich aufgrund seines Gehaltes an wasserlöslichem Silikat einerseits ökologisch vorteilhaft, andererseits weist dieser eine gute Haftung zu mineralischen Bauteilen wie Beton, Kalksandstein oder dergleichen auf, und zudem aufgrund der aushärtenden Silikatbestandteile zugleich eine gewisse Härte und Kompressionsbeständigkeit (Restvolumen bei definierter Druckkraft). Hierbei ist wesentlich, dass als anorganische Komponente wasserlösliche Silikate eingesetzt werden, welche somit filmbildende Bestandteile der Zellstruktur des Schaumes sind. Durch die ausgehärteten Film bildenden Silikatbereiche der Zellstruktur des Schaumes ist dieser bei Krafteinwirkung um ein geringeres Maß zusammendrückbar, als ein reiner Polymerschaum oder aber ein Polymerschaum mit in diesem verteilten (wasserunlöslichen) anorganischen Feststoffen, welche somit nicht die Wandstruktur der Zellwände, welche aus einem Film bildenden Material hergestellt sind, beeinflussen. Andererseits kann der erfindungsgemäße Schaum bei geringem Anteil an wasserunlöslichen Feststoffen bei geringen oder mittleren Kräften, bei welchen die Zellwände noch nicht durch Druckausübung zerstört werden, eine vergleichsweise hohe Härte aufweisen, gleichzeitig aber aufgrund der elastomeren Polymerbestandteile immer noch eine gewisse Elastizität bzw. Dehnbarkeit mit elastischen Rückstelleigenschaften.

Besonders vorteilhaft ist mindestens ein organisches Polymer der wässrigen Phase ein R-Kautschukmaterial und/oder M-Kautschukmaterial oder das organische Polymer besteht hieraus. Ein R-Kautschukmaterial ist hierbei ein Kautschukmaterial mit durchgehendem C-C-Grundgerüst (Backbone) des Polymers und ungesättigten C-C-Doppelbindungen im Grundgerüst. Ein M-Kautschukmaterial ist ein solches mit durchgehendem C-C-Grundgerüst (durchgehende Polymethylenketten) des Polymers und ohne ungesättigte C-C-Doppelbindungen im Grundgerüst. Das R-Kautschukmaterial und/oder M-Kautschukmaterial ist jeweils im Rahmen der Erfindung vorzugsweise filmbildendes Polymer.

Besonders bevorzugt besteht das Polymermaterial überwiegend (zu ≥ 30-45 Gew.-% oder ≥ 50-65 Gew.-% oder ganz besonders bevorzugt ≥ 75-85 Gew.-% oder ≥ 90-95 Gew.-%) oder vollständig aus R-Kautschukmaterial, bezogen auf das Gesamtgewicht an Polymer. Derartige Bestandteile haben sich als besonders bevorzugt herausgestellt, da diese bereits in vergleichsweise geringen Gehalten eine vergleichsweise hohe Elastizität des ausgehärteten Schaumes ergeben. Weiterhin wird aufgrund der elastomeren Bestandteile des Polymers, insbesondere durch R-Kautschukbestandteile, eine Aushärtung des Schaumes unter Erhalt der Zellstruktur auch bei vergleichsweise hohen Wassergehalten der Schaumzusammensetzung ermöglicht, da die Elastomerbestandteile auch bei einem Schrumpfen des Schaumes aufgrund eines Wasserverlustes beim Aushärten desselben einen Spannungsausgleich bewirken und somit Risse bzw. Mikrorisse in der Zellstruktur vermeiden. Der resultierende Schaum kann somit auch eine vergleichsweise geringe Luftdurchlässigkeit bzw. auch bei großen Temperaturwechseln (beispielsweise witterungsbedingt) eine hohe Lebensdauer aufweisen. Das R-Kautschukmaterial ist vorzugsweise filmbildend.

Als R-Kautschukmaterial können beispielsweise Naturkautschuke, Isoprenkautschuk, Butadienkautschuk, Chloroprenkautschuk, Styrol-Butadien-Kautschuk, Nitril-Butadien-Kautschuk, hydrierter Nitril-Butadien-Kautschuk (HNBR), Nitril-Chloropren-Kautschuk, Butyl-Kautschuk, Isopren-Styrol-Kautschuk oder Kombinationen derselben eingesetzt werden, oder allgemein Kautschuke enthaltend Butadien, ggf. auch Alkylbutadiene, als Copolymere. Als besonders bevorzugt haben sich Styrol-Butadien-Kautschuk (SBR), Nitril-Butadien-Kautschuk (NBR, XNBR) oder Isopren-Styrol-Kautschuk (SIR) oder Mischungen derselben herausgestellt, insbesondere SBR und NBR oder Kombinationen derselben.

Als M-Kautschukmaterial können insbesondere, Ethylenkautschuk, EPDM (Ethylenpropylendien, EPM (Ethylenpropylen), CM (chlorierter PE-Kautschuk), FKM (Fluorkautschuk), FFKM (Perfluorkautschuk), FPM (Polypropylen-Tetrafluorethylen-Copolymer). Insbesondere kann das organische filmbildende Polymer ein R-Kautschukmaterial und/oder M-Kautschukmaterial umfassen oder sein, insbesondere ein Styrol-Butadien-Copolymer-Kautschukmaterial oder ein Vinylhalogenid-Alkylen-Coplymer oder Mischungen derselben.

Gegebenenfalls kann das filmbildende Polymer auch aus anderen Kautschukmaterialien bestehen oder teilweise aus diesen gebildet sein.

In dem organischen filmbildenden Polymer kann der M-Kautschuk in einem Gehalt von ≥ 5-10 Gew.-% oder ≥ 15-20 Gew.-% enthalten sein, insbesondere ≤ 40-50 Gew.-% oder ≤ 10-20 Gew.-% oder ≤ 5 Gew.-% oder nicht vorhanden sein. Gegebenenfalls kann der Gehalt an M-Kautschuk des organischen filmbildenden Polymers ≥ 30-45 Gew.-% oder ≥ 50-65 Gew.-% oder auch ≥ 75-85 Gew.-% oder ≥ 90-95 Gew.-% betragen oder vollständig aus diesem bestehen, jeweils bezogen auf den organischen Polymergehalt der Zusammensetzung. Die physikalischen Eigenschaften wie Elastizität des ausgehärteten Schaumes sind hierdurch variierbar. Das M-Kautschukmaterial ist jeweils vorzugsweise filmbildend. Insbesondere kann der Gesamtgehalt an R-Kautschuk und M-Kautschuk des organischen filmbildenden Polymers ≥ 30-45 Gew.-% oder ≥ 50-65 Gew.-% oder auch ≥ 75-85 Gew.-% oder ≥ 90-95 Gew.-% betragen oder das Polymer vollständig aus diesen bestehen. R-Kautschuk und M-Kautschukmaterial sind jeweils vorzugsweise filmbildend.

Der Gehalt an R-Kautschuk im organischen filmbildenden Polymer kann im Bereich von 30-100 Gew.-% desselben liegen. Nach einer Ausführungsform kann der Gehalt an R-Kautschuk im organischen filmbildenden Polymer im Bereich von 45-80 Gew.-% oder von 50-65 Gew.-% liegen. Dies kann sich jeweils auch auf den Gehalt an R-Kautschuk bezogen auf den Feststoffgehalt der Zusammensetzung beziehen. Der resultierende Schaum kann hierdurch bspw. eine höhere Härte aufweisen, als bei höheren Gehalten an R-Kautschukmaterial. Der Gehalt an M-Kautschuk im organischen filmbildenden Polymer kann im Bereich von 30-100 Gew.-% desselben liegen. Nach einer Ausführungsform kann der Gehalt an M-Kautschuk im organischen filmbildenden Polymer im Bereich von 45-80 Gew.-% oder von 50-65 Gew.-% liegen. Dies kann sich jeweils auch auf den Gehalt an M-Kautschuk bezogen auf den Feststoffgehalt der Zusammensetzung beziehen. Der resultierende Schaum kann hierdurch bspw. eine höhere Härte aufweisen, als bei höheren Gehalten an M-Kautschukmaterial.

Insbesondere kann der Gesamtgehalt an R-Kautschuk und M-Kautschuk im organischen filmbildenden Polymer im Bereich von 30-100 Gew.-% desselben liegen. Nach einer Ausführungsform kann der Gesamtgehalt an R- und M-Kautschuk im organischen filmbildenden Polymer im Bereich von 45-80 Gew.-% oder von 50-65 Gew.-% liegen. Dies kann sich jeweils auch auf den Gesamtgehalt an Rund M-Kautschuk bezogen auf den Feststoffgehalt der Zusammensetzung beziehen.

Das Gewichtsverhältnis von R-Kautschuk zu M-Kautschuk kann im Bereich von 100:1 bis 1:20 oder 100:1 bis 1:10 betragen, beispielsweise im Bereich von 100:1 bis 1:1, gegebenenfalls auch im Bereich von 10:1 bis 1:10 oder 3:1 bis 1:3.

Vorzugsweise weist das organische filmbildende Polymer, insbesondere R- und/oder M-Kautschukmaterial, jeweils keine hydrolysierbaren und/oder sauren Nebengruppen wie Ester-, Ethergruppen, Sulfo-Gruppen oder COOH Gruppen auf, besonders bevorzugt keine Nebengruppen außer Alkyl-Gruppen und/oder Halogen, im Speziellen keine Nebengruppen außer Alkyl-Gruppen, was unabhängig oder in Kombination miteinander für das R- und/oder M-Kautschukmaterial gilt. In Kombination hiermit oder unabhängig hiervon weist vorzugsweise das organische filmbildende Polymer, insbesondere R- und/oder M-Kautschukmaterial, jeweils keine Nebengruppen mit aktiven Wasserstoffatomen auf, welche gegebenenfalls mit gelösten Silikaten reagieren könnten, wie beispielsweise Hydroxygruppen, primäre oder sekundäre Aminogruppen, primäre Amidogruppen (-NH-CO-) usw.. Hierdurch kann eine hohe Lagerstabilität der Zusammensetzung erzielt werden. Die Polymergrundgerüste sind jeweils vorzugsweise heteroatomfrei. Hierdurch können jeweils unerwünschte Nebenreaktionen mit dem wasserlöslichen Silikat bzw. einer basischen wässrigen Phase vermieden und die Lagerstabilität der Zusammensetzung erhöht werden.

Besonders bevorzugt ist das eingesetzte organische filmbildende Polymer, insbesondere Elastomer bzw. Kautschukmaterial, ein carboxyliertes Copolymer (in den Seitenketten carboxyliert), wodurch der resultierende ausgehärtete Schaum eine besonders hohe Haftung an dem jeweiligen Bauteil, insbesondere einem Bauteil aus einem anorganischen Material wie Beton, aufweisen kann. Insbesondere kann ein carboxyliertes Styrol-Butadien-Copolymer eingesetzt werden, welches ausgefilmt besonders bevorzugt ein Elastomer darstellt.

Vorzugsweise sind ≥ 20-30 Gew.-% oder ≥ 50-60 Gew.-% oder besonders bevorzugt ≥ 75-80 Gew.-% oder ≥ 90-95 Gew.-% des organischen filmbildenden Polymers Elastomere oder beim Aushärten des Schaumes Elastomere-bildende Bestandteile bzw. Kautschukmaterialien, beispielsweise auch 100 Gew.-%, gegebenenfalls bereits ≥ 20-35 Gew.-%. Gegebenenfalls können die organischen Polymere auch nicht-elastomere Komponenten aufweisen, beispielsweise Polyacrylate, Polymethacrylate, Polyamide, Polyester, Styrole, Vinylacetate, Polyurethane oder Kombinationen derselben. Die nicht-elastomeren Polymeranteile können bspw. thermoplastische Polymere sein. Hierdurch sind insgesamt auch die elastischen Eigenschaften des ausgehärteten Schaums variierbar.

Die nicht-elastomeren Polymere können bspw. einen Anteil von ≤ 80-90 Gew.-% oder ≤ 50-75 Gew.-% oder auch ≤ 30-40 Gew.-% des Gesamtgehaltes an polymeren Bestandteilen (jeweils bezogen auf das Trockengewicht der Polymere) ausmachen, vorzugsweise ≤ 10-20 Gew.-% oder ≤ 2-5 Gew.-% oder auch praktisch 0 Gew.-%, der Gehalt kann ≥ 2-5 Gew.-% oder ≥ 10-15 Gew.-% betragen, bspw. ≥ 20-30 Gew.-%. Der Gehalt an nicht-elastomeren Polymeren bezogen auf den Gesamtgehalt organischer Polymere kann also im Bereich von 2-75 Gew.-% oder 5-50 Gew.-% liegen. Die weiteren nicht-elastomeren Polymere sind vorzugsweise filmbildende Polymere (bei 23°C). Es können so durch Wahl der Anteile der jeweiligen Polymere einerseits die filmbildenden Eigenschaften und andererseits die elastischen Eigenschaften nach Bedarf eingestellt und insbesondere an den Gehalt an wasserlöslichem Silikat angepasst werden.

Das filmbildende organische Polymer kann unvernetzt sein. Wird ein Polymer-Blend eingesetzt, so können ≤ 35-50 Gew.-% der Polymerkomponenten oder ≤ 10-20 Gew.-% oder ≤ 5 Gew.-% derselben unvernetzt sein. Erfindungsgemäß ist das eingesetzte organische Polymer (bezogen auf dessen Gesamtzusammensetzung) ein bei Raumtemperatur (23°C) filmbildendes Polymer, bei welchem also beim Trocknen bzw. Aushärten des Schaums die polymeren Bestandteile, insbesondere im Falle einer Polymerdispersion die dispergierte Polymerteilchen, miteinander zur Anhaftung kommen und quasi miteinander (teilweise) verschmelzen bzw. ineinanderlaufen, um einen zusammenhängenden Film zu bilden. Dies lässt sich durch Ausbreiten des Schaums auf einer ebenen Unterlage und Trocknen bei Raumtemperatur bis zur Gewichtskonstanz zeigen. Die Eigenschaft des Polymers als "filmbildend" im Rahmen der Erfindung bezieht sich jeweils vorzugsweise auf die Schaumzusammensetzung (gegebenenfalls ohne Treibmittel). Alternativ oder zusätzlich bezieht sich die Eigenschaft des Polymers als "filmbildend" im Rahmen der Erfindung jeweils vorzugsweise auf die eingesetzte Polymerdispersion. Dies hat sich als besonders bevorzugt herausgestellt, um einen ausgehärteten Schaum mit für viele Anwendungszwecke vorteilhaften elastomeren Eigenschaften bereitzustellen. Insbesondere kann ein derartiger Schaum zum Ausfüllen von Fugen zwischen benachbarten Bauteilen eingesetzt werden, insbesondere von Fugen von Fenstern und Türen zu den angrenzenden, die jeweilige Mauerwerksöffnung bzw. Mauerwerkslaibung ausbildenden Bauwerksteilen. Das im Rahmen der Erfindung eingesetzte "organische Polymer" sei somit stets auch als "filmbildendes organisches Polymer" verstanden, sofern sich aus dem Zusammenhang im Einzelnen nichts anderes ergibt.

Die Filmbildung bei 23°C des Polymers kann insbesondere durch Einstellung dessen Glasübergangstemperatur erzielt werden, welche im ≥ -40°C oder ≥ -30°C oder ≥ -20°C betragen kann, die Glasübergangstemperatur kann ≤ 10-20°C betragen. Dies kann sich auf die elastomeren und/oder nicht-elastomeren Bestandteile der Zusammensetzung beziehen. Hierdurch wird beim Aushärten des Schaumes eine Filmbildung durch die polymeren Bestandteile erzielt, filmbildend zusammen mit der wässrigen Silikatlösung (bzw. in Bezug auf den ausgehärteten Schaum filmbildend mit dem Silikat). Der durch Verschäumen mittels des Treibmittels erzeugte Schaum weist liegt somit in einer homogenen Verteilung der organischen Polymere mit dem wasserlöslichen Silikat vor.

Besonders bevorzugt wird das organische filmbildende Polymer als wässrige Dispersion eingesetzt, welche sich durch günstige Film bildende Eigenschaften und eine einfache, vorzugsweise homogene, Vermischbarkeit mit wässrigen Silikatlösungen (Wasserglas) auszeichnen. Besonders bevorzugt wird eine alkaliverträgliche Dispersion eingesetzt, welche also z.B. bei 23°C für einen Zeitraum von 1-2 Monaten ihre physikalischen Eigenschaften wie Viskosität, Stabilität (Abwesenheit von Separationen von Dispersionsbestandteilen usw.) praktisch nicht ändert (z.B. um weniger als 5-10% der jeweiligen Größe).

Die Polymerdispersion kann Polymerteilchen im Bereich von 5 nm bis 1.000 µm aufweisen, vorzugsweise 10 nm bis 500 µm oder 20 nm bis 100 µm, besonders bevorzugt bis 20 bis 50 µm, jeweils bezogen auf die mittlere Teilchengröße. Es hat sich herausgestellt, dass hierdurch einerseits der erzeugte Schaum eine hohe Schaumstabilität (also vor Aushärtung) aufweist, andererseits wässrige Phase enthaltend das wasserlösliche Silikat und organische Polymer eine hohe Beständigkeit und damit lange Lagerfähigkeit aufweist.

Vorzugsweise beträgt der Feststoffgehalt an organischem filmbildendem Polymer in der wässrigen Phase ≥ 15-17 Gew.-%, vorzugsweise ≥ 20-25 Gew.-% oder ≥ 30 Gew.-%. Der Feststoffgehalt an organischem filmbildendem Polymer in der wässrigen Phase kann ≤ 55-65 Gew.-% oder gegebenenfalls ≤ 45-50 Gew.-% oder ≤ 25-30 Gew.-% betragen. Besonders bevorzugt beträgt der Gehalt an organischem filmbildendem Polymer in der wässrigen Phase 15-60 Gew.-% oder vorzugsweise 20-55 Gew.-%, beispielsweise 25-50 Gew.-%, oder 20-45 Gew.-%. Die wässrige Phase versteht sich hierbei jeweils ohne Treibmittel. Es hat sich herausgestellt, dass die derartigen Schaumzusammensetzungen einerseits eine hohe Schaumstabilität aufweisen, andererseits eine gute Elastizität bzw. Dehnbarkeit sowie Reißdehnung. Das organische filmbildende Polymer kann jeweils ein Elastomer sein.

Der Feststoffgehalt an wasserlöslichem Silikat in der wässrigen Phase (ohne Treibmittel) beträgt vorzugsweise ≥ 5-8 Gew.-% oder besonders bevorzugt ≥ 12-15 Gew.-%, gegebenenfalls ≥ 20 Gew.-%. Der Feststoffgehalt an wasserlöslichem Silikat in der wässrigen Phase kann vorzugsweise ≤ 20-25 Gew.-% betragen. Insbesondere kann der Feststoffgehalt an wasserlöslichem Silikat in der wässrigen Phase 8-25 Gew.-% oder besonders bevorzugt 10-25 Gew.-% betragen. Hierdurch können die die Zellstruktur bildenden Zellwände einen ausreichend hohen Gehalt an wasserlöslichem Silikat aufweisen, welcher einerseits beim frisch geschäumten Schaum Teilbereiche der Zellwände ausbildet und mit dem in der wässrigen Phase vorhandenen organischen Polymer mischbar ist. Anders als bei in der wässrigen Phase verteilten bzw. dispergierten teilchenförmigen (wasserunlöslichen) Silikaten können die wasserlöslichen Silikate eine Flüssigkeitsmembran ausbilden, welche die Zellwände erzeugt und beim Trocknen bzw. Aushärten des Schaumes unter Wasserverlust glasartig bzw. zumindest im Wesentlichen amorph erstarren. Hierdurch weisen die Zellwände eine vergleichsweise hohe Stabilität auf, wobei die wasserlöslichen Silikate innigst und vorzugsweise homogen mit den polymeren Bestandteilen vermischt sind und zusammen mit diesen gegebenenfalls eine Phase bilden, beispielsweise unter Ausbildung eines einheitlichen Filmes. Durch die Silikate werden die Zellwände stabilisiert und die Schaumstabilität sowie Schaumfestigkeit erhöht, uns somit auch ein Absacken des Schaums verringert oder unterbunden. Durch den vergleichsweise hohen Gehalt an wasserlöslichen Silikaten in der den Schaum erzeugenden Zusammensetzung können die unter Wasserverlust ausgebildeten Zellwände auch eine vergleichsweise hohe Festigkeit aufweisen, anders als beispielsweise bei Verwendung von wasserunlöslichen Silikaten wie Alumosilikaten und dergleichen oder unter Verwendung von hydraulisch abbindenden Feststoffen wie Zementen, welche unter Wasseraufnahme Hydrate, zumeist kristalline Hydrate bilden. Diese Hydrate bilden jedoch vergleichsweise harte und spröde Teilbereiche innerhalb des Schaumes, welche mit den filmbildenden Polymeren wenig kompatibel und mit den aus wasserlöslichen Silikaten gebildeten Zellwänden nicht vergleichbar sind.

Das eingesetzte wasserlösliche Silikat kann insbesondere ein Alkalimetallsilikat darstellen, bzw. in Form eines Wasserglases und/oder in Form eines gelösten Salzes. Das Alkalimetallsilikat kann ein Natriumsilikat sein, gegebenenfalls in Kombination mit Kalium- und/oder Lithium-Ionen. Als Alkalisilikat ist auch ein Kaliumsilikat (Kaliumwasserglas) einsetzbar, gegebenenfalls in Kombination mit Natrium- und/oder Lithium-Ionen. Der Natriumgehalt (in Atomprozent) kann größer sein als der Kalium- und/oder Lithiumgehalt des Wasserglases, bspw. Na-Gehalt ≥ 50-60 at.-% oder ≥ 70-80% bezogen auf den Atomgehalt der Alkalien des Wasserglases bzw. der wässrigen Phase, ggf. auch ≥ 90-95 at.-% oder praktisch 100 at.-%.

Das eingesetzte Wasserglas kann ein Alkalimetall-Silizium-Atomverhältnis von 1,5 bis 6 oder 2 bis 4, vorzugsweise 2,5 bis 3,5, besonders bevorzugt 2,75 bis 3,25 aufweisen, beispielsweise ca. 3. Die eingesetzte Silikatlösung bzw. Wasserglas kann einen Feststoffgehalt im Bereich von 20-75 Gew.-% oder 30-60 Gew.-% aufweisen. Der pH-Wert der eingesetzten wässrigen Silikatlösung (z.B. als Wasserglas) kann im Bereich von 9-13, vorzugsweise 10 bis 12,5, beispielsweise ca. 12, betragen, wodurch eine gute Kompatibilität mit dem organischen Polymer bzw. der eingesetzten wässrigen Polymerdispersion ohne funktionelle Gruppen mit aktiven Wasserstoffatomen gegeben ist, was die Lagerstabilität der Zusammensetzung aber auch deren filmbildenden Eigenschaften, Sprühbarkeit aus der Dose und dessen Aushärtungseigenschaften beeinflusst.

Der pH-Wert der wässrigen Phase kann ≥ 8-9 oder ≥ 10 betragen, beispielsweise im Bereich von 8-12 oder 9-12, ohne hierauf beschränkt zu sein.

Das Verhältnis von organischem filmbildendem Polymer zu wasserlöslichem Silikat (jeweils bezogen auf deren Feststoffgehalt) kann bevorzugt im Bereich von 6 : 1 bis 1,75 : 1 oder 5 : 1 bis 1.75 : 1 liegen, insbesondere im Bereich von 4,5 : 1 bis 1,75 1 oder im Bereich 4 : 1 bis 1,75:1. Der derart hergestellt ausgehärtete Schaum weist überraschenderweise eine hohe Elastizität bei vergleichsweise geringer reversibler Kompressibilität bei Anwendung eines geringen Druckes auf. Im speziellen kann das Gewichtsverhältnis von organischem Polymer zu wasserlöslichem Silikat vorzugsweise ≥ 2 : 1 oder besonders bevorzugt ≥ 2,5 : 1 oder ≥ 2,75 : 1 sein, wodurch sich die Lagerstabilität der abgefüllten Schaumzusammensetzung wesentlich erhöht, wobei diese Grenze jeweils in Kombination mit dem der erfindungsgemäß offenbarten Verhältnisse der Komponenten org. Polymer zu wasserlöslichem Silikat gilt.

Der Gesamtgehalt an organischem filmbildendem Polymer und wasserlöslichem Silikat (bezogen auf dessen Feststoffgehalt) in der wässrigen Phase (ohne Treibmittel) beträgt vorzugsweise ≥ 30-40 Gew.-%, der Gehalt kann ≤ 70-75 Gew.-% oder ≤ 60 Gew.-% betragen, beispielsweise im Bereich von 30-70 Gew.-%, vorzugsweise im Bereich von 35-65 Gew.-% oder 40-60 Gew.-%. Die Zusammensetzung mit dem Treibmittel ist hierdurch einen homogenen Schaum bildend verdüsbar, insbesondere auch als Dosenschaum, und der Schaum weist nicht ein zu starkes Schrumpfverhalten auf sowie eine ausreichende Stabilität.

Der Feststoffgesamtgehalt in der wässrigen Phase (Gesamtgehalt gelöster und/oder ungelöster Feststoffe) kann bis zu 75 Gew.-% betragen oder im Bereich von 25-70 Gew.-% liegen, vorzugsweise im Bereich von 30-65 Gew.-% oder 35-70 Gew.-%, insbesondere 40-60 Gew.-%. Entsprechendes gilt unabhängig hiervon für den Gehalt an von Wasser verschiedenen Komponenten in der wässrigen Phase. Der Wassergehalt der wässrigen Phase ist also jeweils der auf 100 Gew.-% verbleibende Rest, also bspw. im Bereich von 30-75 Gew.-% oder 35-70 Gew.-% oder vorzugsweise 30-65 Gew.-% usw. Ein zu starkes Schrumpfen des Schaums bei dessen Trocknung wird verhindert und zugleich gute Verdüsbarkeit des Schaums insbesondere als Dosenschaum werden hierdurch ermöglicht.

Vorzugsweise weist die Schaumzusammensetzung neben dem Treibmittel und der (genau einen) wässrigen Phase keine weiteren Phasen auf. Gegebenenfalls kann die Zusammensetzung auch weitere Phasen, welche sich beim Ausdüsen mit dem Treibgas zumindest im Wesentlichen gleichmäßig bzw. homogen mit der wässrigen Phase vermischen, aufweisen.

Nach einer vorteilhaften Weiterbildung weist die wässrige Phase mindestens ein wasserlösliches Oligo- oder Polyphosphat oder Mischungen aus diesen auf, welche sich zur Herstellung eines stabilen Schaumes, welcher eingeschäumt in eine Fuge diese ohne oder nur mit geringem Absacken vor der Aushärtung ausfüllt, als besonders geeignet herausgestellt hat. Das oder die Oligo- oder Polyphosphate können in einem Gehalt von ≥ 0,15 Gew.-% und/oder ≤ 10 Gew.-% bezogen auf den Feststoffgehalt der wässrigen Phase enthalten sein, beispielsweise ≥ 0,25 Gew.-%, vorzugsweise im Bereich von 1-6 Gew.-% oder 1,5-5 Gew.-%.

Das Oligo- oder Polyphosphat kann 2, 3, 4 oder 6 kondensierte Phosphoratome aufweisen, oder mehr, beispielsweise 3 oder mehr, vorzugsweise nicht mehr als 6-8 oder nicht mehr 10-12 Phosphoratome. Metaphosphate sind von den Polyphosphaten mit umfasst, die Polyphosphate können auch offenkettig sein. Gegebenenfalls kann auch Ortho-Phosphate eingesetzt werden. Es können ≥ 50-75 Gew.-% oder ≥ 85-95 Gew.-% der Phosphate als Oligo- oder Polyphosphate (einschließlich meta-Phophate) vorliegen, vorzugsweise zu 100% derselben.

Als einsetzbare Oligo- oder Polyphosphate haben sich solche Alkalimetall-Oligo- oder Polyphosphate besonders bewährt, da diese zu stabilen Schäumen führen und auch die Lagerstabilität nicht negativ beeinflussen. Insbesondere können Natrium- und/oder Kaliumphosphate eingesetzt werden, ggf. können auch Lithium und/oder Ammoniumionen als Gegenionen vorhanden sein.

Vorzugsweise sind die Phosphate vollständig durch Kationen neutralisiert, es liegen also keine Hydroxyphosphate vor.

Als besonders bevorzugt haben sich Metaphosphate bewährt, welche ≥ 50-75 Gew.-% oder ≥ 85-95 Gew.-% oder ca. 100 Gew.-% der Phosphate darstellen können.

Als besonders vorteilhaft haben sich ferner Natrium-tripolyphosphat (Pentanatriumtripolyphosphat), Natriumpyrophosphat (insbesondere Tetra-Natriumsalz), Kaliumpyrophosphat (insbesondere Tetra-Kaliumsalz), Natriumhexametaphosphat, Kaliumhexametaphosphat oder Mischungen derselben herausgestellt. Insbesondere haben sich lösliche Tripolyphosphate, insbesondere des Natriums und/oder Kaliums, oder lösliche Metaphosphate wie Hexametaphosphate, insbesondere des Natriums und/ oder Kaliums, als bevorzugt herausgestellt. Metaphosphate können hierbei gegenüber Polyphosphaten bzw. Tripolyphosphaten Schäume mit vergleichsweise höherer Elastizität ergeben.

Es versteht sich, dass gegebenenfalls Natrium und/oder Kalium teilweise oder vollständig auch durch Lithium und/oder Ammonium ausgetauscht sein können, wenn auch weniger vorteilhaft.

Das eingesetzte Phosphat ist in der wässrigen Phase vorzugsweise vollständig gelöst, ggf. zu ≥ 5 % oder ≥ 50-75 % dessen Gesamtgehalt in der wässrigen Phase. Das eingesetzte Phosphat weist vorzugsweise eine Löslichkeit von ≥ 0,25-0,5 g/Liter der wässrigen Phase oder ≥ 1-2 g/Liter oder ≥ 5-10 g/Liter auf.

Durch das eingesetzte Oligo- bzw. Polyphosphat kann das Erscheinungsbild der in eine Fuge eingebrachten Schaumraupe verbessert werden, insbesondere hinsichtlich des auch nach Trocknung des Schaums gleichmäßigen Ausfüllens der Fuge mit vermindertem bzw. ohne Absacken oder Zusammenfallen des Schaums in der Fuge. "Absacken" heißt hier, dass der Schaum sein Gesamtvolumen im Wesentlichen beibehält aber seine Form unter Verlaufen der Schaumraupe verliert. Das Vermögen des Ausfüllens der Fuge wird somit verbessert. Die eingesetzten Phosphate bedingen zudem unabhängig hiervon eine gleichmäßigere Zellstruktur des Schaums. Unabhängig hiervon kann durch die genannten Phosphate ggf. die Flexibilität des Schaums erhöht werden, was insbesondere für Metaphosphate oder höhere Polyphosphate mit 4-5 oder mehr Phosphatgruppen (ggf. auch als Metaphosphate) gilt, wie bspw. Na-Hexametaphosphat.

Besonders bevorzugt weist die wässrige Phase der Schaumzusammensetzung (ohne Treibmittel) ≤ 20-25 Gew.-% anorganische Feststoffe (also in nicht-gelöster Form in der Schaumzusammensetzung) auf, vorzugsweise ≤ 10-15 Gew.-% oder ≤ 3-5 Gew.-%. Die anorganischen Feststoffe können beispielsweise Intumeszenz-Materialien wie Blähgraphit, Vermiculit, Perlit usw. sein, gegebenenfalls auch Füllstoffe, UV-Absorber oder dergleichen wie beispielsweise Titandioxid, andere Titanate oder andere Metalloxide, Quarzsand, wasserunlösliche Silikate einschließlich Alumosilikate oder dergleichen. Der Gehalt an anorganischen (nicht wasserlöslichen) Feststoffen kann gegebenenfalls ≥ 0,2-0,5 Gew.-%, beispielsweise auch ≥ 1-5 Gew.-% betragen, beispielsweise im Bereich von 0,2-20 Gew.-% liegen. Die Feststoffe können eine Teilchengröße im Bereich von 5 nm bis 1.000 µm aufweisen, beispielsweise im Bereich von 10 nm bis 500 µm oder 50 nm bis 250 µm, beispielsweise im Bereich von 500 nm bis 50 µm (jeweils bezogen auf den mittleren Teilchendurchmesser), ohne hierauf beschränkt zu sein. Durch den vergleichsweise geringen Anteil anorganischer Feststoffe können die Zellwände des resultierenden Schaumes im Wesentlichen durch die wasserlöslichen Silikate und die in der wässrigen Phase fein verteilt dispergierten Komponenten organischen Polymere gebildet werden, wobei das wasserlösliche Silikat und das organische Polymer zugleich Film bildende Eigenschaften aufweisen. Der ausgehärtete Schaum kann hierdurch sehr flexibel an die jeweiligen Erfordernisse angepasst werden, beispielsweise eine sehr hohe Flexibilität oder aufgrund der wasserlöslichen Silikatkomponente ausreichende Härte bei geringem spezifischen Gewicht und definierter Porenstruktur aufweisen. Die Partikelgröße der genannten Feststoffe ist anzupassen, um ein Ausschäumen der Zusammensetzung, insbesondere bei einem Dosenschaum, nicht zu behindern.

Vorzugsweise enthält die wässrige Phase (ohne Treibmittel) ≤ 30 Gew.-% oder ≤ 20-25 Gew.-% an ungelösten Feststoffen, welche von dem organischen Polymer verschieden sind, besonders bevorzugt ≤ 10-15 Gew.-% oder ≤ 5-10 Gew.-%, besonders bevorzugt ≤ 1-3 Gew.-% oder praktisch keine. Der Gehalt an ungelösten Feststoffen kann gegebenenfalls ≥ 0,2-0,5 Gew.-%, beispielsweise auch ≥ 1-5 Gew.-% betragen, beispielsweise im Bereich von 0,1-20 Gew.-% oder 0,2-10 Gew.-% liegen. Vorzugsweise enthält die wässrige Phase (ohne Treibmittel) ≤ 20-25 Gew.-% hydraulisch abbindende Feststoffe, besonders bevorzugt ≤ 10-15 Gew.-% oder ≤ 5-10 Gew.-%, besonders bevorzugt ≤ 1-3 Gew.-%. Der Gehalt an hydraulisch abbindenden Feststoffen kann gegebenenfalls ≥ 0,2-0,5 Gew.-%, beispielsweise auch ≥ 1-5 Gew.-% betragen, beispielsweise im Bereich von 0,1-20 Gew.-% oder 0,2-10 Gew.-% liegen.

Als hydraulisch abbindende Feststoffe seien hierbei solche verstanden, welche unter Wasseraufnahme abbinden und sich verfestigen, wie beispielsweise Zement, Gips (Calciumsulfat bzw. Calciumsulfat-Halbhydrat) oder dergleichen. Durch den nicht zu hohen Anteil an hydraulisch abbindenden Feststoffen wird die Festigkeit des Schaumes im Wesentlichen durch das ausgehärtete wasserlösliche Silikat bestimmt und kann so aufgrund der Film bildenden Eigenschaften desselben eingestellt und andererseits mit Variation des Verhältnisses zu dem organischen Polymer in weiten Bereichen variiert werden, wobei dennoch der ausgehärtete Schaum sowohl in gewisser Weise gleichzeitig elastische als auch steife Eigenschaften aufweisen kann.

Das Gewichtsverhältnis von wasserlöslichem Silikat und organischem filmbildendem Polymer kann derart eingestellt sein, dass eine durchgehende Struktur der Zellwände durch das organische Polymer aufgebaut wird (hoher Gehalt an organischem Polymer gegenüber wasserlöslichem Polymer), wobei das wasserlösliche Silikat Teilbereiche der jeweiligen Zellwände aufbaut und damit die Festigkeit des Schaumes nach wie vor mitbestimmt. Die Struktur der Zellwände kann insbesondere homogen sein, so dass unterschiedliche Bereiche der Zellwände an organischem Polymer oder Silikat z.B. optisch mit bloßem Auge oder ggf. lichtmikroskopisch bis evt. 100-200-fache Vergrößerung nicht auflösbar sind.

Gegebenenfalls kann die Zusammensetzung des Schaumes derart eingestellt sein, dass zumindest in Teilbereichen desselben (welche sich vorzugsweise jeweils über weniger als den mittleren Zelldurchmesser des Schaumes erstrecken) sowohl durchgehende Bereiche der Zellstruktur aus organischem Polymer als auch gleichzeitig durchgehende Bereiche aus ausgehärtetem wasserlöslichem Silikat aufgebaut werden, wodurch der Schaum einerseits elastische Eigenschaften aufweist, andererseits auch eine gewisse Festigkeit oder Druckbeständigkeit.

Die wässrige Phase (ohne Treibmittel) kann eine Viskosität im Bereich von 3-50.000 mPa.s oder 5-10.000 mPa.s aufweisen, vorzugsweise im Bereich von 10-5.000 mPa.s oder 50-2.500 mPa.s oder besonders bevorzugt im Bereich von 100-1.000 mPa.s. Es hat sich herausgestellt, dass eine derartige wässrige Phase unter Verwendung eines Treibmittels besonders gut und gleichmäßig verschäumbar ist.

Die eingesetzte wässrige Polymerdispersion bzw. -lösung und/oder die eingesetzte wässrige Silikatlösung (z.B. Wasserglas) können jeweils unabhängig voneinander oder beide jeweils eine Viskosität im Bereich von 3-50.000 mPa.s oder 5-10.000 mPa.s aufweisen, vorzugsweise im Bereich von 10-5.000 mPa.s oder 10-2.500 mPa.s oder besonders bevorzugt im Bereich von 15-1.000 mPa.s oder 15-500 mPa.s. Eine derartige Polymerdispersion ist mit einer wässrigen Silikatlösung (Wasserglas) besonders gut vermischbar und gut zusammen mittels des Treibmittels verdüsbar.

Die Viskositäten im Rahmen der Erfindung beziehen sich jeweils auf eine Messtemperatur von 23°C, bestimmt mit einem Brookfield-Viskosimeter DK 1,60 Upm.

Weiterhin weist bevorzugt die schäumbare wässrige Phase ein Schäumungsmittel auf, vorzugsweise in Form eines oberflächenaktiven Mittels, welches ein anionisches oder kationisches oder neutrales Tensid, vorzugsweise ein anionisches Tensid, sein kann. Das Schäumungsmittel kann auch ein Wachs oder eine Wachszusammensetzung sein. Wachse haben sich als Schäumungsmittel bei der erfindungsgemäßen Zusammensetzung als besonders bevorzugt herausgestellt, auch um einen gleichmäßigen Schaum zu ergeben (gleichmäßig in Bezug auf die Zellstruktur und/oder gleichmäßig in Bezug auf die Vermischung von Silikatlösung und wässriger Polymerphase bzw. Polymerdispersion). Einsetzbar sind auch Fettsäureester, Sulfonsäureester und dergleichen, auch von mehrwertigen Säuren. Das Schäumungsmittel kann in einem Gehalt von 0,001 bis 10 Gew.-% oder 0,001 bis 5 Gew.-% oder vorzugsweise 0,005 bis 2 Gew.-% oder 0,005 bis 0,5 Gew.-% enthalten sein, oder auch ohne zusätzliches Schäumungsmittel.

Die wässrige Phase kann weitere Komponenten umfassen, wie Bindemittel in Bezug auf den ausgehärteten Schaum, wasserabweisende Mittel, Schäumungsmittel, rheologische Hilfsmittel, insbesondere viskositätserhöhende Mittel oder Thixotropiermittel, Rostschutzmittel, Konservierungsmittel, Stabilisatoren, insbesondere Fette, pulverförmige Zusatzstoffe oder Füllstoffe oder dergleichen. Weiterhin kann die Zusammensetzung gegebenenfalls Brandschutzmittel oder Intumeszenzmittel aufweisen.

Vorzugsweise enthält allgemein die wässrige Phase (ohne Treibmittel) ≤ 20-25 Gew.-% oder ≤ 30-40 Gew.-% an weiteren Komponenten, welche von organischem filmbildendem Polymer, wasserlöslichem Silikat und gegebenenfalls wasserlöslichem Phosphat und Schäumungsmittel sowie Wasser verschieden sind, besonders bevorzugt ≤ 10-15 Gew.-% oder ≤ 5-10 Gew.-%, besonders bevorzugt ≤ 1-3 Gew.-%. Der Gehalt an den weiteren Komponenten kann gegebenenfalls ≥ 0,2-0,5 Gew.-%, beispielsweise auch ≥ 1-5 Gew.-% betragen, beispielsweise im Bereich von 0,1-20 Gew.-% oder 0,2-10 Gew.-% liegen. Dies kann sich jeweils auf Einkomponenten- oder Zweikomponentenzusammensetzungen (hier auf die Gesamtzusammensetzung) beziehen.

Die erfindungsgemäße Zusammensetzung ist besonders ausgebildet, um als Einkomponentenzusammensetzung (also sämtliche Komponenten in einer Kammer vorliegend) bereitgestellt zu werden oder auch vorzuliegen, auch wenn die Zusammensetzung anders, z.B. als Zweikomponentenzusammensetzung konfektioniert ist.

Vorzugsweise liegt die Schaumzusammensetzung als Zweikomponentenzusammensetzung vor, wobei eine der beiden Komponenten eine wässrigen Phase ist, welche in Kombination jeweils zumindest einen Teil des chemisch gelösten Silikats und/oder des organischen Polymers umfasst.

Insbesondere kann die wässrige Phase (ohne Treibmittel) ≤ 15-20 Gew.-% oder ≤ 10-12 Gew.-% an hydraulisch abbindenden Komponenten wie Zement aufweisen, welche von organischem Polymer, wasserlöslichem Silikat und gegebenenfalls wasserlöslichem Phosphat und Schäumungsmittel sowie Wasser verschieden sind, besonders bevorzugt ≤ 5-7 Gew.-% oder ≤ 2-3 Gew.-%, besonders bevorzugt ≤ 1 Gew.-% oder praktisch keine. Hydraulisch abbindende Komponenten sind hierbei insbesondere solche, welche sich unter Wasseraufnahme verfestigen, wie Zement, Gips oder dergleichen.

Der ausgedüste Schaum ist nach ca. 1-12 Stunden, beispielsweise 2-8 Stunden schneidfest (ohne Anhaftungen am Schneidgerät) und nach ca. 0,5 bis 2 Tagen ausgehärtet (jeweils bei 23°C, 50 % rel. Luftfeuchtigkeit). Dies bezieht sich jeweils auf eine freie Schaumraupe einer Breite von 2 cm und einer Höhe von 2 cm.

Die erfindungsgemäße Schaumzusammensetzung kann besonders bevorzugt als Einkomponentenschaum ausgebildet sein, umfassend sämtliche Komponenten vorzugsweise einschließlich Treibmittel in einer Kammer. Sämtliche der oben stehend genannten Komponenten können Bestandteil des Einkomponentenschaumes sein.

Die Schaumzusammensetzung kann gegebenenfalls auch als Zweikomponentenschaum ausgebildet sein. Im diesem Falle kann die weitere (zweite) Komponente Bestandteile umfassen, welche mit alkalischen Komponenten oder mit Silikationen chemische Reaktionen eingehen, insbesondere Neutralisierungs- und/oder Zersetzungsreaktionen. Diese Komponenten können beispielsweise sein: saure Komponenten (insbesondere saure Gase, Mineralsäuren, saure Salze (organisch und/oder anorganisch) oder Kombinationen), reaktive Silikate bzw. Siliziumdioxid, Ester oder allgemein durch Alkalien hydrolisierbare organische oder anorganische Verbindungen, insbesondere organische Ester, Carbonsäureester, Kieselsäureester einschließlich Siloxane, Amide und dergleichen. Weiterhin kann die zweite Komponente alternativ oder zusätzlich wasserlösliche Metallsalze umfassen, insbesondere solche, welche schwer lösliche Hydroxyde bilden, insbesondere Erdalkalimetallsalze, Aluminiumsalze, Zinksalze, Metalloxide und dergleichen. Diese Salze können Halogenide, insbesondere Chloride, Sulfate, Phosphate, Karbonate (einschließlich Hydrogenkarbonate), Phosphonate oder andere Salze von Phosphorsäuren umfassen. Beispielsweise können dies sein Kalziumchlorid, Kalziumhydroxyd, Magnesiumchlorid, Magnesiumsulfat, Aluminiumsulfate (auch in binärer oder ternärer Form), insbesondere Aluminium(III)sulfat Al2(SO4)3, Zinksulfat, Metalloxide wie Kalziumoxid, Magnesiumoxid, Zinkoxid, Phosphonate, insbesondere Aluminiumphosphonat, alkalische Lösungen, Salze polyvalenter amphoterer Metalle wie Natriumaluminate oder dergleichen, Metallpulver, insbesondere auch amphoterer Metalle, einschließlich Magnesium, Zink, Aluminium. Insbesondere können auch beliebige Kombinationen der oben genannten Komponenten eingesetzt werden. Durch die Bestandteile der zweiten Komponente des 2K-Schaumes, insbesondere die oben genannten Bestandteile, können die Eigenschaften des ausgehärteten Schaumes eingestellt werden, insbesondere Elastizität, Festigkeit, Wasseraufnahmevermögen, Widerstandsfähigkeit gegen äußere Einflüsse oder dergleichen.

Die zweite Komponente, sofern vorhanden, kann in einem Gehalt von 1-40 Gew.-%, vorzugsweise 2-30 Gew.-%, insbesondere 5-20 Gew.-% oder 5-10 Gew.-% bezogen auf die Gesamtzusammensetzung (ohne Treibmittel) enthalten sein.

Bei der zweikomponentigen Schaumzusammensetzung ist somit vorzugsweise eine der beiden Komponenten eine wässrigen Phase, welche in Kombination jeweils zumindest einen Teil des chemisch gelösten Silikats und des organischen Polymers umfasst. Besonders bevorzugt stellt die eine Komponente eine wässrige Phase dar, welche den gesamten Anteil des chemisch gelösten Silikats an der Gesamtzusammensetzung (umfassend beide Komponenten) und/oder den gesamten Anteil des organischen Polymers an der Gesamtzusammensetzung umfasst.

Als Treibmittel können komprimierte Gase oder unter Druck stehende Flüssigkeiten, insbesondere unter Druckentlastung abgasende komprimierte Flüssigkeiten eingesetzt werden, insbesondere Kohlenwasserstoffe, besonders bevorzugt Propan und/oder Butan (besonders bevorzugt als Isobutan), im speziellen Propan/Isobutan, gegebenenfalls auch halogenierte Kohlenwasserstoffe, Kohlendioxid und/oder Ether wie Dimethylether. Insbesondere für Zweikomponentenzusammensetzungen sind Dimethylether einsetzbar. Dieses Treibmittel hat sich insbesondere bei Einkomponentenzusammensetzungen bewährt, es können gegebenenfalls aber auch andere Treibmittel einsetzbar sein. Die als Treibmittel eingesetzten komprimierten Gase sind insbesondere bei Raumtemperatur (23°C) und Normaldruck (1013 hPa) gasförmig. Insbesondere kann das Treibmittel zumindest im Wesentlichen frei oder frei von Kohlendioxid sein, bspw. einen Kohlendioxidgehalt von ≤ 25 Gew.-% oder ≤ 10 Gew.-% oder vorzugsweise ≤ 5 Gew.-% oder ≤ 2 Gew.-% aufweisen, bspw. ≤ 1 Gew.-% oder ≤ 0,5 Gew.-%.

Die Schaumzusammensetzung ist vorzugsweise zumindest im Wesentlichen frei oder frei von in Bezug auf das filmbildende organische Polymer koagulierend wirkenden Bestandteilen, gegebenenfalls abgesehen von dem wasserlöslichen Silikat, sofern dieses in Bezug auf das filmbildende organische Polymer koagulierende Eigenschaften aufweisen sollte. Insbesondere weist die Schaumzusammensetzung besonders bevorzugt keine gasförmigen koagulierenden Komponenten auf. Abgesehen von gegebenenfalls wasserlöslichen Silikaten weist die Zusammensetzung vorzugsweise ≤ 15-20 Gew.-% oder ≤ 5-10 Gew.-% oder vorzugsweise ≤ 2-3 Gew.-% oder ≤ 1 Gew.-% an in Bezug auf das filmbildende organische Polymer koagulierend wirkende Bestandteile auf. Dies kann unabhängig jeweils auch für gasförmige koagulierende Bestandteile gelten (20°C; 1013 hPa).

Das Treibmittel kann allgemein in einem Gehalt von 2 bis 30 Gew.-% oder 2-20 Gew.-%, insbesondere 2-15 Gew.-% bezogen auf das Gesamtgewicht der schäumbaren Zusammensetzung enthalten sein, ohne hierauf beschränkt zu sein, vorzugsweise 2-10 Gew.-%, beispielsweise 3-8 Gew.-%, gegebenenfalls jeweils auch ≥ 3 Gew.-% oder ≥ 1 Gew.-%. Das Treibmittel ist bei einem Zweikomponentenschaum vorzugsweise in dem die erste Komponente aufweisenden Behälter bei dessen Lagerung enthalten. Insbesondere kann sich der Gehalt des Treibmittels von 2 bis 30 Gew.-% oder 2-20 Gew.-%, insbesondere 2-15 Gew.-% bezogen auf das Gesamtgewicht der schäumbaren Zusammensetzung, ohne hierauf beschränkt zu sein, vorzugsweise 2-10 Gew.-%, beispielsweise 3-8 Gew.-%, gegebenenfalls jeweils auch ≥ 3 Gew.-% oder ≥ 1 Gew.-% der Zusammensetzung auf den Gehalt an Treibmittelkomponenten ausgewählt aus der Gruppe von Kohlenwasserstoffen, besonders bevorzugt Propan und/oder Butan (besonders bevorzugt als Isobutan), im speziellen Propan/Isobutan, halogenierte Kohlenwasserstoffe und Ether beziehen, im speziellen auf den Gehalt an Komponenten ausgewählt aus der Gruppe Kohlenwasserstoffen, besonders bevorzugt Propan und/oder Butan (besonders bevorzugt als Isobutan), im speziellen Propan/Isobutan, und Ether wie Dimethylether.

Vorzugsweise ist die Schaumzusammensetzung zumindest im Wesentlichen frei oder frei von Isocyanaten. Der Gehalt an Isocyanaten in der Schaumzusammensetzung kann ≤ 10-15 Gew.-% oder ≤ 5 Gew.-% betragen (bezogen auf die Gesamtzusammensetzung einschließlich Treibmittel), vorzugsweise ≤ 3 Gew.-% oder ≤ 2 Gew.-%, besonders bevorzugt ≤ 1 Gew.-% oder ≤ 0,5 Gew.-%, im speziellen ≤ 0,1 Gew.-% oder ≤ 0,05 Gew.-%. Dies bezieht sich jeweils auf den Gesamtgehalt an Isocyanaten, also Komponenten mit mindestens einer oder mehreren freien Isocyanat-Gruppen. Dies kann sich jeweils im Speziellen auch auf organische Isocyanate wie MDI, einschließlich polymeres MDI beziehen.

Die Schaumzusammensetzung kann zumindest im Wesentlichen frei oder frei von Polyurethanen sein. Der Gehalt an Polyurethanen in der Schaumzusammensetzung kann ≤ 20 Gew.-% oder ≤ 10-15 Gew.-% betragen (bezogen auf die Gesamtzusammensetzung einschließlich Treibmittel), vorzugsweise ≤ 5 Gew.-% oder ≤ 3 Gew.-%, besonders bevorzugt ≤ 2 Gew.-% oder ≤ 1 Gew.-%, im speziellen ≤ 0,5 Gew.-% oder ≤ 0,1 Gew.-%. Diese Gehalte können sich jeweils auch auf den Gesamtgehalt Urethanverbindungen beziehen.

Die Schaumzusammensetzung kann zumindest im Wesentlichen frei oder frei Polyolen sein, also organischen Verbindungen mit 2 oder mehr Hydroxylgruppen. Der Gehalt an Polyolen in der Schaumzusammensetzung kann ≤ 20 Gew.-% oder ≤ 10-15 Gew.-% betragen (bezogen auf die Gesamtzusammensetzung einschließlich Treibmittel), vorzugsweise ≤ 5 Gew.-% oder ≤ 3 Gew.-%, besonders bevorzugt ≤ 2 Gew.-% oder ≤ 1 Gew.-%, im speziellen ≤ 0,5 Gew.-% oder ≤ 0,1 Gew.-%.

Die erfindungsgemäße Schaumzusammensetzung ist wasserabwaschbar bzw. wasserlöslich.

Der erzeugte Schaum bindet nach gewisser Zeit ab, wobei der Schaum einer weiteren Zeit vollständig aushärtet. Im Abbindungszustand (vor der Aushärtung) kann der Schaum durch eine Werkzeug wie einen Spachtel geglättet werden, z.B. Anordnung des Schaums in einer Fuge, ohne an dem Werkzeug anzuhaften.

Besonders bevorzugt liegt die erfindungsgemäße Schaumzusammensetzung als unter Druck stehender Dosenschaum in einer Dose bzw. Kanister abgefüllt vor. Die Dose ist hierbei vorzugsweise ein manuell handhabbarer bzw. schüttelbarer Druckbehälter. Durch manuelles Schütteln der Dose ist die Zusammensetzung ausreichend homogenierbar, insbesondere die wässrige Phase mit dem Treibmittel vermischbar, um einen homogenen Schaum aus der Dose auszudüsen und die Komponenten wässrige Phase und Treibmittel gleichmäßig ohne Anreicherung einer der Komponenten der Dose auszubringen. Zur Homogenisierung kann in der Dose ein Mischkörper vorhanden sein, der durch manuelles Schütteln der Dose oder beim Ausdüsen des Doseninhalts durch den Treibgasdruck eine ausreichende Homogenisierung bewirkt, so dass externe Hilfsmittel vorzugsweise nicht notwendig sind.

Durch Vermischen der wässrigen Phase mit dem Treibmittel, vorzugsweise durch Schütteln des beide Komponenten enthaltenden Behälters, und Ausdüsen zusammen mit dem im Behälter druckbeaufschlagt vorliegenden Treibmittel ist ein Schaum herstellbar, wobei die wässrige Phase filmbildend ist. Das Ausdüsen erfolgt vorzugsweise allein durch Entspannung des im Behälter druckbeaufschlagten Treibmittels, also vorzugsweise ohne weitere oder ohne behälteraußenseitige Hilfsmittel. Das Ausdüsen kann insbesondere unter manuellem Öffnen eines Ventils erfolgen, so dass im Behälter bzw. in der Dose druckbeaufschlagte Treibmittel sich entspannt und selbsttätig mit der wässrigen Zusammensetzung aus dem Behälter ausgedüst wird. Das Ausdüsen kann durch ein an seinem freien Ende mit einer Düse versehenem Ausstoßrohr erfolgen. Der die Schaumzusammensetzung enthaltende Behälter kann hierzu mit einem Sprühkopf versehen sein, derartige Sprühköpfe sind bekannt. Die Schaumzusammensetzung ist hierfür angepasst und geeignet. Durch das Ausdüsen liegt die Latex-Komponente und die Lösung des wasserlöslichen Silikates innig vermengt, einen homogenen Film (Schaumwände) bildend vor, wobei der Film mittels des Treibmittels zum Schaum verschäumt ist. Die erfindungsgemäße Schaumzusammensetzung ist besonders angepasst, um durch Schütteln homogenisiert zu werden, so dass nach Ausschäumen sich ein gleichmäßiger Schaum ohne Reste der Schaumzusammensetzung in dem Behälter und Ausflockungen oder Blockierung beim Ausdüsen ergibt, und dies nach längerer Lagerzeit des befüllten geschlossenen Behälters, gegebenenfalls von mehreren Wochen oder ≥ 1-2 Monaten.

Weiterhin ist besonderer Vorteil der erfindungsgemäßen Zusammensetzung, dass diese auch in Dosenbehältern mit einem Volumen von ≤ 5-10 l oder ≤ 2,5 l unter manueller Handhabung der Dose beim Ausbringen des Schaumes gehandhabt werden kann, insbesondere bei Lagerung zusammen mit dem Treibmittel. Hierdurch kann der Schaum als Ortschaum eingesetzt werden. Alternativ kann der Schaum jedoch gegebenenfalls auch werkseitig eingesetzt werden, dann auch in größeren Gebinden.

Die erfindungsgemäße Schaumzusammensetzung ist also besonders angepasst, um unter Druck (insbesondere dem Behälterdruck, unter dem die in dem Behälter bevorratete Zusammensetzung steht) durch eine Rohr oder eine Düse oder eine manuell betätigbaren Pistolenapplikator (welcher an dem Behälte befestigt, z.B. aufgeschraubt wird) aus dem Behälter ausgedüst zu werden. Der die Schaumzusammensetzung enthaltende Behälter weist somit bevorzugt ein Rohr oder eine Düse oder einen manuell betätigbaren Pistolenapplikator auf, durch welche(n/s) jeweils die Zusammensetzung ausdüsbar ist.

Weiterhin umfasst die Erfindung ein Verfahren zum Verschließen von Bauwerksfugen oder zum Verbinden von Bauteilen, wobei der Schaum in die Bauwerksfuge oder zwischen die zu verbindenden Bauteile eingebracht wird, wie bei üblicher Handhabung eines Klebemittelschaumes, welcher zunächst auf ein erstes Bauteil aufgebracht wird wobei dann ein zweites Bauteil auf den aufgebrachten Schaum aufgesetzt wird, um die Bauteile miteinander zu verbinden.

Der erfindungsgemäße Schaum zeichnet sich aus durch:
- eine ausreichende Schaumstabilität und Zähigkeit
- geringes Schrumpfverhalten bei der Aushärtung
- sehr gute Haftung am Untergrund, insbesondere mineralischem Untergrund
- ausgewogene Abbindezeit
- hohe Lagerbeständigkeit auch als Einkomponenten-Dosenschaum
- gute Flexibilität
- ökologische Unbedenklichkeit

Weiterhin umfasst die Erfindung ein durch das erfindungsgemäße Verfahren hergestelltes Bauwerk, wobei das Bauwerk vorzugsweise eine Fuge aufweist, welche zumindest teilweise mit einer erfindungsgemäßen verschäumten Schaumzusammensetzung ausgefüllt ist oder dass zwei oder mehrere Bauteile, vorzugsweise aneinander liegend, durch Verkleben mittels einer erfindungsgemäßen verschäumten Schaumzusammensetzung verbunden sind.

Die Erfindung sei nachfolgend anhand von Ausführungsbeispielen beschrieben.

### Ausführungsbeispiel I:

Nach dem Ausführungsbeispiel 1 (Zusammensetzung V3)_weist der Schaum folgende Zusammensetzung auf (jeweils Teile als Gewichtsteile) :
1. Organisches Polymer in Form einer Dispersion (im Speziellen SBR-Latex, filmbildend): ca. 80 Teile
   (Feststoffgehalt, organisches filmbildendes Polymer: 51,5%)
   Viskosität der Dispersion: 100-500 mPa.s
2. Silikatlösung (Wasserglas): 25 Teile
   Feststoffgehalt (Gehalt an wasserlöslichem Silikat):52%
   Na/Si-Verhältnis: 3
   Viskosität: ca. 50-200 mPa.s
   pH-Wert: 12
3. Phosphat (Natriumtripolyphosphat): 5,5 Teile
4. Emulgator: 0,2 Teile
5. Treibmittel (Propan/iso-Butan): 10 Teile

Im Rahmen der Ausführungsbeispiele stellt das organische Polymer jeweils ein Elastomer dar, insbesondere SBR.

Die Komponenten 3 und 4 sind nicht für alle Anwendungen zwingend aber vorteilhaft.

Homogenisierungseigenschaften (Shakeability):
Die Zusammensetzung zeichnet sich durch sehr gute Homogenisierungseigenschaften (Schütteleigenschaften) aus, nämlich Homogenisierung des Doseninhaltes durch manuelles Schütteln. Die mit Treibmittel befüllte Dose wird hierzu 10 mal kräftig manuell geschüttelt, mit einem Schüttelkörper in Form einer losen Kugel in der Dose, als mechanisches Homogenisierungshilfsmittel. Der Doseninhalt ist dann gleichmäßig homogenisiert, der Schaum also über den gesamten Doseninhalt gleichmäßig und mit gleichbleibender Zusammensetzung ausdüsbar.

Homogenisierungseigenschaften nach 2 Tagen:
Die Schaumzusammensetzung ist nach mehreren Tagen Abfüllungszustand in der Dose (z.B. 2 Tagen) gut durch Schütteln unter den genannten Bedingungen homogenisierbar.

Schaumstabilität:
Der durch Ausdüsen mittels des Treibmittels aus der Dose hergestellte Schaum ist im Wesentlichen stabil, mit nur geringer Tendenz zum Zusammenfallen (weniger als 30-40 Vol.-% zwischen Ausbringung und Aushärtung), gemessen an einer freien Schaumraupe (Raupe auf Untergrund) bei einer Breite von 2 cm und Höhe von 2 cm.

Fugenausfüllung:
Wird mit dem Schaum eine Normfuge (Breite 3 cm; Tiefe 10 cm) ausgefüllt (überstehender Schaum wird unmittelbar nach der Ausfüllung entfernt), so wird diese auch nach Aushärten des Schaums im Wesentlichen vollständig ausgefüllt, mit nur geringfügiger Schrumpfung (weniger als 10%).

Elastizität, Reißdehnung:
Der erzeugte Schaum ist ein Weichschaum mit guter Elastizität und guten Dehnungseigenschaften, insbesondere kann der Schaum Lageveränderungen an den die Fugenwände bereitstellen Bauteilen, wie durch Temperaturänderungen und insbesondere Erschütterungen auftreten können, gut ausgleichen.

Haftung:
Die Haftung des Schaums an mineralischem Untergrund, Metallen wie Aluminium oder Stahl, und Holz aber auch Kunststoffen (z.B. PE oder PVC) ist gut. Die Haftung an dem Untergrund ist stärker als die Reißfestigkeit des Schaums, bei lateraler Beabstandung der die Fuge ausbildenden Bauteile reißt der Schaum in sich, die Schaumanhaftung an die Bauteile bleibt unverändert bestehen.

Sprühbarkeit:
Ferner ist die Schaumzusammensetzung gleichmäßig, also ohne Flockenbildung, welche gegebenenfalls an der Schaumraupe anhaften und nicht homogen in dieser integriert sind, verschäumbar.

Der ausgedüste Schaum (Schaumraupe 2 cm Breite und 2 cm Höhe) ist nach ca. 8 Stunden schneidfest (ohne Anhaftungen am Schneidgerät) und nach ca. 1 Tag ausgehärtet (jeweils bei 23°C, 50 % rel. Luftfeuchtigkeit).

Gegebenenfalls kann die Zusammensetzung bis zu 10-20 Gew.-% oder ggf. mehr weitere Additive und Hilfsstoffe enthalten, beispielsweise Schaumbildner, rheologische Modifizierungsmittel, Stabilisatoren, anorganische oder organische Füllstoffe (nicht Film bildend, vorzugsweise keine elastomeren Materialien), ohne hierauf beschränkt zu sein.

Nach einer weiteren Abwandlung kann der eingesetzte Schaum als zweikomponentiger Schaum eingesetzt werden. Ausgehend von der Zusammensetzung nach Ausführungsbeispiel 1 kann die weitere Komponente 2-20%, vorzugsweise 5-10% an modifizierenden Bestandteilen enthalten. Diese Bestandteile werden als zweite Komponente eingesetzt, wenn diese mit alkalischen Lösungen oder wasserlöslichen Silikaten unerwünschte Reaktionen eingehen, beispielsweise Neutralisierungsreaktionen, Zersetzungsreaktionen, einschließlich hydrolytischer Spaltung von Estern, Umesterungen, Bildung wasserunlöslicher Salze durch Fällungsreaktionen oder dergleichen. Beispielsweise können in gleichen Gewichtsanteilen eingesetzt werden: Mineralsäuren, saure Salze wie Hydrogencarbonate, Hydrogenphosphate, organische Ester, wasserlösliche Erdalkalimetallsalze, Aluminiumphosphonate. Hierdurch können die Eigenschaften des Schaumes im Hinblick auf wasserabweisende Eigenschaften, Porenstruktur, Brandeigenschaften und dergleichen eingestellt werden.

### Ausführungsbeispiel II:

Nach dem Ausführungsbeispiel 2 weist der Schaum folgende Zusammensetzung auf (jeweils Teile als Gewichtsteile, gleiche Komponenten wie bei Ausführungsbeispiel 1):
1. Organisches Polymer in Form einer Dispersion (im Speziellen SBR-Latex): ca. 65 Teile
2. Silikatlösung (Wasserglas): 36 Teile
3. Phosphat (Natriumtripolyphosphat): 1,5 Teile
4. Emulgator: - Teile
5. Treibmittel (Propan/iso-Butan): 6,5 Teile

Die Homogenisierungseigenschaften dieser Zusammensetzung sind etwas besser als der nach Ausführungsbeispiel 1. Ansonsten sind die Eigenschaften des Schaums und der Zusammensetzung ähnlich der dem Ausführungsbeispiel 1.

Die erfindungsgemäßen Schaumzusammensetzungen zeichnen sich insbesondere durch gute Homogenisierbarkeit durch Schütteln einer Schaumdose und gute Schaumstabilität, auch in der Fuge, aus. Im Gegensatz wird hierzu (unter Verwendung ansonsten gleicher Komponenten) bei einem reinen Latexschaum eine unzureichende Schaumstabilität gefunden, der Schaum kollabiert praktisch sofort, bei zu hohem Silikatgehalt eine nur unzureichende Homogenisierbarkeit durch Schütteln der Dose oder sogar ein Blockieren beim Ausdüsen.

### Vergleichsbeispiele Serie 1:

Diese Vergleichsspiele VGI-1 bis VGI-5 umfassen das Ausführungsbeispiel 1 (VGI-3). Die Komponenten sind jeweils identisch mit denen des Ausführungsbeispiels 1, lediglich die Gehalte variieren. Die Gehalte sind hier jeweils als Gewichtsteile angegeben. Die Vergleichsbeispiele VGI-1, VGI-4 und VGI-5 sind von der Erfindung nicht umfasst.

| | VGI-1 | VGI-2 | VGI-3 | VGI-4 | VGI-5 |
|---|---|---|---|---|---|
| Komp. 1 | 105 | 82 | 80 | 63 | 42 |
| Komp. 2 | - | 20 | 25 | 40 | 62 |
| Komp. 3 | 5,5 | 5,5 | 5,5 | 5,5 | 5,5 |
| Komp. 4 | 0,2 | 0,2 | 0,2 | 0,2 | 0,2 |
| Komp. 5 | 10 | 10 | 10 | 10 | 10 |
| Homogenisierbarkeit | 5 | 5 | 5 | 1 (blockiert) | - (zu dick) |
| Homogenisierbarkeit nach 2 Tagen | 5 | 3 | 3 | 1 | |
| Struktur der Schaumraupe | ¹⁾ | 4 | 4 | ²⁾ | ²⁾ |
| FugenausFüllung | ¹⁾ | 5 | 5 | ²⁾ | ²⁾ |
| Elastizität | ¹⁾ | 5 | 4 | 2 | |
| Dehnbarkeit | ¹⁾ | 5 | 4 | 1 | |
| Sprühbarkeit | 4 | 4 | 4 | 1 | |

| | | | | | |
|---|---|---|---|---|---|
| ¹⁾ keine Schaumraupe erhalten, der Schaum kollabierte unmittelbar nach dem Ausdüsen ²⁾ keine Schaumraupe erhalten, da der Schaum nicht ausdüsbar war | | | | | |

Die Bewertung der Eigenschaften erfolgt in einer Skala von 5 (sehr gut) bis 1 (gerade noch zur Bestimmung der Eigenschaft verwertbar).

Eine sehr gute Homogenisierbarkeit ergibt eine vollständig homogene Schaumzusammensetzung nach 10-mal manuellem Schütteln in der befüllten Dose.

Die Struktur der Schaumraupe bezieht sich auf die Form der freien Schaumraupe, welche Ihre Breite nach Ausdüsen auch nach Aushärtung aufweist.

Die Fugenausfüllung bezieht auf die Ausschäumung einer Normfuge (3 cm Breite, 10 cm Tiefe). Eine sehr gute Fugenausfüllung heißt, dass bei vollständig mit Schaum ausgefüllter Fuge (Überstand entfernt) auch der ausgehärtete Schaum die Fuge praktisch vollständig ausfüllt. Ein Zusammensacken um weniger als 10% der Fugentiefe wird als Note 1 angesehen.

Elastizität und Dehnbarkeit stellen hier relative Merkmale innerhalb der Versuchsreihe dar, in Bezug auf die Anforderungen an die Dehnbarkeit beim Ausfüllen von Tür- und Fensterfugen zur angrenzenden Laibung unter Berücksichtigung von Vibrationen als Dauerbelastung.

Eine sehr gute Sprühbarkeit heißt, dass die Schaumraupe in sich zusammenhängend ist, ohne Spritzer oder Bildung von Schaumflocken, welche in der Raupe nicht integriert sind und zu dieser ein schwache Bindung haben und ggf. nur lose an der Raupe anhaften.

### Vergleichsbeispiele Serie 2:

Die Zusammensetzung dieser Serie basieren auf Zusammensetzungen entsprechend dem Ausführungsbeispiel 2.

Im Folgenden wird das Feststoff-Verhältnis organisches filmbildendes Polymer /Silikat (genannt Latex-Verhältnis) verändert (Latex-Index: Verhältnis der Feststoffgehalte an (i) filmbildendes org. Polymer und (ii) wasserlöslichem Silikat), auf Grundlage einer Zusammensetzung entsprechend Ausführungsbeispiel 2. Der Gehalt an org. filmbildenden Polymer und an wasserlöslichem Silikat werden gegenläufig zueinander variiert, wobei die Gehalte der anderen Komponenten konstant gehalten werden.

Auf die Vergleichsspiele der Serie 1 sei in Bezug auf die Spezifikation der Komponenten und Bewertung der Eigenschaften vollinhaltlich Bezug genommen. Diese Serie enthält einen geringeren Gehalt an Phosphat, die Lagerstabilität der Schaumzusammensetzungen in der Dose verbessert sich hierdurch deutlich, ohne weiteres auf 9 Monate ohne Änderung der Homogenisierungs- und Schäumungseigenschaften.

| | VGII-1 | VGII-2 | VGII-3 | VGII-4 | VGII-5 |
|---|---|---|---|---|---|
| Latex-Index | 1,82 | 2,08 | 2,4 | 2,85 | 3,3 |
| Sprühbarkeit nach 3 Tagen Lagerung | 2 | 3 | 3 | 5 | 5 |
| FugenausFüllung (%) | 1 | 5 | 4 | 4 | 3 |
| Homogenisierbarkeit | 5 | 5 | 5 | 5 | 5 |
| Homogenisierbarkeit nach 2 Tagen | 1 | 4 | 5 | 5 | 5 |
| Homogenisierbarkeit nach 4 Tagen | 1 | 1 | 4 | 5 | 5 |
| Homogenisierbarkeit nach 8 Tagen | 1 | 1 | 2 | 5 | 5 |

Hieraus ergibt sich, dass mit zunehmendem Latex-Index die Fugenfüllungseigenschaften sich verschlechtern. Die Homogenisierbarkeit (Schütteleigenschaften) bleiben konstant, wenn der Latex-Index bzw. das Feststoffverhältnis org. Polymer : wasserlösliches Silikat größer als 2,65 ist, beispielsweise 2,85 oder größer. Ein Latex-Index von ≥ 2,65 oder ≥ 2,85 ist somit allgemein im Rahmen der Erfindung bevorzugt. Andererseits verschlechtern sich mit zunehmendem Latex-Index die Fugenfülleigenschaften, die Homogenisierbarkeit bleibt ab einem schon höheren Wert konstant. Der Latex-Index sollte zumindest bei dieser Zusammensetzung oder allgemein vorzugsweise ≥ 2 betragen.

Ausgehend von obiger Zusammensetzung mit einem Latex-Index von 1,82 (entsprechend Vergleichsbeispiel 2) wurde der Anteil an Treibmittel (Propan/iso-Butan) zwischen 1 und 25 Teilen variiert. Unterhalb eines Mindestgehaltes von 3 Gew.-% an der Schaumzusammensetzung ergibt sich zumeist kein ausreichendes Schäumungsverhalten. Eine Erhöhung des Treibmittelgehaltes über 10-12 Gew.-% ergibt eine schlechtere Fugenausfüllung sowie verstärkte Schaumspritzer beim Ausschäumen. Ein Treibmittelgehalt im Bereich von 4-10 Gew.-% hat sich hierzu als vorteilhaft erwiesen. Gehalte an Treibmittel über 8 Gew.-% führen zu schlechteren Homogenisierungseigenschaften (Schütteleigenschaften), oberhalb 10 Gew.-% ergibt sich nach 4 Tagen oder länger eine signifikante Verschlechterung.

Ferner wird der Einfluss des Gehaltes an löslichem Phosphat auf die Zusammensetzung untersucht.

Ausgehend von einem Latex-Index von 2,85 und einem Treibmittelgehalt von 6 Gew.-% (im Übrigen entsprechend der Zusammensetzung nach Vergleichsbeispiel 2) ergeben sich für Gehalte an löslichem Phosphat (hier: Na-Tripolyphosphat) von größer 6 Gew-.% nur sehr schlechte (Note 1) Homogenisierungseigenschaften nach 4 Tagen, oberhalb von 5 Gew.-% nur sehr schlechte (Note 1) Homogenisierungseigenschaften nach 5 Tagen, jeweils Gehalt der wässrigen Zusammensetzung. Oberhalb von 5 Gew.-% wird ein unruhiger Schaum beobachtet (die ausgedüste Schaumraupe ist sehr unruhig und der Schaum bewegt sich). Oberhalb von 2,5 Gew.-% lösliches Phosphat beginnen sich die Homogenisierungseigenschaften langsam zu verschlechtern. Der Gehalt an löslichem Phosphat hat einen Einfluss auf das Erscheinungsbild der in der Fuge gebildeten Schaumraupe, welches gleichmäßiger ist, insbesondere in Hinblick auf die Gleichmäßigkeit der Schaumstruktur (Porenbild), insbesondere bei Gehalten von ≥ 0,25-0,5 Gew.-%. Ein Gehalt von löslichem Phosphat bis zu 3 Gew.-%, gegebenenfalls bis zu 4 Gew.-% hat sich als besonders vorteilhaft herausgestellt.

Wird im Rahmen der Erfindung auf den Begriff "Teile" Bezug genommen, so sind dies stets "Gewichtsteile", sofern aus dem Zusammenhang sonst nichts anderes hervorgeht.

## Patentansprüche

1. Schaumzusammensetzung für Bauzwecke, insbesondere zum Füllen von Fugen oder zum Verbinden von Bauteilen, enthaltend eine schäumbare wässrige Phase und ein Treibmittel, welche unter Ausdüsen miteinander schaumbildend sind, wobei die schäumbare wässrige Phase mindestens ein organisches Polymer und anorganische Bestandteile umfasst, wobei das organische Polymer bezogen auf dessen Trockensubstanz in der wässrigen Phase in einem Gehalt von ≥ 3 Gew.-% enthalten ist, wobei das organische Polymer ein filmbildendes organisches Polymer ist, und wobei das organische Polymer in Form einer Dispersion oder wässrigen Lösung vorliegt,
**dadurch gekennzeichnet,**
**dass** die anorganischen Bestandteile ein in der wässrigen Phase chemisch gelöstes Silikat, dessen Lösung filmbildend ist, umfassen,
**dass** das wasserlösliche Silikat bezogen auf dessen Trockensubstanz in der wässrigen Phase in einem Gehalt von ≥ 3 Gew.-% enthalten ist,
**dass** das organische filmbildende Polymer beim Verschäumen mit der Silikatlösung zusammen einen Silikat-Polymer-Schaum ergibt,
**dass** das organische filmbildende Polymer und das wasserlösliche Silikat, jeweils bezogen auf deren Trockensubstanz, in der wässrigen Phase in einem Gewichtsverhältnis von 8:1 bis 1,75:1 enthalten sind, und
**dass** der Gesamtgehalt an organischem filmbildendem Polymer und wasserlöslichem Silikat in der wässrigen Phase ≥ 20 Gew.-% und ≤ 75 Gew.-% beträgt.

2. Schaumzusammensetzung nach Anspruch 1, **dadurch gekennzeichnet, dass** das Gewichtsverhältnis des organischen Polymers zu dem wasserlöslichen Silikat jeweils bezogen jeweils auf deren Feststoffgehalt im Bereich von 6 : 1 bis 1,75:1 liegt.

3. Schaumzusammensetzung nach Anspruch 1 oder 2, **dadurch gekennzeichnet, dass** das organische Polymer ein elastomeres Polymer umfasst oder ein solches ist.

4. Schaumzusammensetzung nach einem der Ansprüche 1 bis 3, **dadurch gekennzeichnet, dass** das Polymer ein R-Kautschukmaterial und/oder M-Kautschukmaterial umfasst oder ist.

5. Schaumzusammensetzung nach einem der Ansprüche 1 bis 4, **dadurch gekennzeichnet, dass** das organische Polymer ≤ 75 Gew.-% nicht-elastomere Polymere umfasst, bezogen auf den Gesamtgehalt an organischem Polymer.

6. Schaumzusammensetzung nach einem der Ansprüche 1 bis 5, **dadurch gekennzeichnet, dass** das wasserlösliche Silikat ein Alkalimetall-Silikat oder ein Gemisch von solchen ist.

7. Schaumzusammensetzung nach einem der Ansprüche 1 bis 6, **dadurch gekennzeichnet, dass** der Gehalt an wasserlöslichem Silikat bezogen auf den Feststoffgehalt der wässrigen Phase ≥ 8 Gew.-% beträgt.

8. Schaumzusammensetzung nach einem der Ansprüche 1 bis 7, **dadurch gekennzeichnet, dass** die wässrige Phase mindestens ein wasserlösliches Oligo- oder Polyphosphat oder Mischungen aus diesen enthält.

9. Schaumzusammensetzung nach Anspruch 8, **dadurch gekennzeichnet, dass** die Oligo- oder Polyphosphate in einem Gehalt von ≥ 0,15 Gew.-% und/oder ≤ 10 Gew.-% bezogen auf den Feststoffgehalt der wässrigen Phase enthalten sind.

10. Schaumzusammensetzung nach einem der Ansprüche 1 bis 9, **dadurch gekennzeichnet, dass** die wässrige Phase oder der gebildete Schaum ≤ 30 Gew.-% ungelöste anorganische Feststoffe enthält.

11. Schaumzusammensetzung nach einem der Ansprüche 1 bis 10, **dadurch gekennzeichnet, dass** der Schaum im ausgehärteten Zustand einen flexiblen Weichschaum ausbildet.

12. Schaumzusammensetzung nach einem der Ansprüche 1 bis 11, **dadurch gekennzeichnet, dass** diese als Einkomponentenzusammensetzung oder dass diese als Zweikomponentenzusammensetzung vorliegt.

13. Verfahren zum Verschließen von Bauwerksfugen oder zum Verbinden von Bauteilen unter Verwendung einer als Schaum ausgebrachten Zusammensetzung nach einem der Ansprüche 1 bis 12, wobei der Schaum in die Bauwerksfuge oder zwischen die zu verbindenden Bauteile eingebracht und anschließend zur Aushärtung gebracht wird.

14. Bauwerk mit Fuge oder bestehend aus mehreren Bauteilen, **dadurch gekennzeichnet, dass** die Fuge zumindest teilweise mit einer verschäumten Schaumzusammensetzung nach einem der Ansprüche 1 bis 12 ausgefüllt ist oder dass zwei oder mehrere Bauteile durch Verkleben mittels einer verschäumten Schaumzusammensetzung nach einem der Ansprüche 1 bis 12 verbunden sind.

## Claims

1. Foam composition for construction use, in particular for filling joints or for assembling components, containing a foamable aqueous phase and a blowing agent, which are capable to form a foam by ejecting them together from a nozzle, the foamable aqueous phase comprising at least one organic polymer and inorganic components, the organic polymer being contained in the aqueous phase, based on its dry substance, in a content of ≥ 3% by weight, the organic polymer being a film-forming organic polymer and the organic polymer being in the form of an aqueous dispersion or solution,
**characterized in that** the inorganic components comprise a silicate chemically dissolved in the aqueous phase, the solution of which is film-forming,
**in that** the water-soluble silicate is contained in the aqueous phase in a content of 3% by weight, based on its dry substance,
**in that** the organic film-forming polymer together with the silicate solution forms a silicate-polymer-foam when foaming,
**in that** the organic film-forming polymer and the water-soluble silicate, in each case based on their dry substance, are contained in the aqueous phase in a weight ratio of 8:1 to 1.75:1 and
**in that** the total content of organic film-forming polymer and water-soluble silicate in the aqueous phase is ≥ 20% by weight and ≤ 75% by weight.

2. Foam composition according to claim 1, **characterized in that** the weight ratio of the organic polymer to the water-soluble silicate is in the range from 6:1 to 1.75:1 in each case based on its solids content.

3. Foam composition according to claim 1 or 2, **characterized in that** the organic polymer comprises or is an elastomeric polymer.

4. Foam composition according to any one of the claims 1 to 3, **characterized in that** the polymer comprises or is an R-rubber material and/or M-rubber material.

5. Foam composition according to any one of the claims 1 to 4, **characterized in that** the organic polymer comprises ≤ 75% by weight of non-elastomeric polymers, based on the total organic polymer content.

6. Foam composition according to any one of the claims 1 to 5, **characterized in that** the water-soluble silicate is an alkali metal silicate or a mixture thereof.

7. Foam composition according to any one of claims 1 to 6, **characterized in that** the content of water-soluble silicate is ≥ 8% by weight based on the solids content of the aqueous phase.

8. Foam composition according to any one of the claims 1 to 7, **characterized in that** the aqueous phase contains at least one water-soluble oligo- or polyphosphate or mixtures thereof.

9. Foam composition according to claim 8, **characterized in that** the oligo- or polyphosphates are contained in a content of ≥ 0.15% by weight and/or ≤ 10% by weight based on the solids content of the aqueous phase.

10. Foam composition according to any one of the claims 1 to 9, **characterized in that** the aqueous phase or the foam formed contains ≤ 30% by weight of undissolved inorganic solids.

11. Foam composition according to any one of claims 1 to 10, **characterized in that** the foam forms a flexible soft foam when cured.

12. Foam composition according to any one of the claims 1 to 11, **characterized in that** it is present as a one-component composition or as a two-component composition.

13. Method for sealing building joints or for connecting building elements using a foamed composition according to one of the claims 1 to 12, wherein the foam is introduced into the building joint or between the building elements to be joined and is subsequently cured.

14. Building structure with a joint or consisting of several building elements, **characterized in that** the joint is at least partially filled with a foamed foam composition according to one of claims 1 to 12 or that two or more building elements are joined by bonding by means of a foamed foam composition according to one of Claims 1 to 12.

## Revendications

1. Composition de mousse pour le bâtiment, en particulier pour remplir des joints ou pour assembler des composants, contenant une phase aqueuse moussable et un agent gonflant capable de former une mousse en les éjectant ensemble à partir d'une buse, la phase aqueuse moussable comprenant au moins un polymère organique et des composants inorganiques, le polymère organique étant contenu dans la phase aqueuse, par rapport à sa substance sèche, dans une teneur ≤ 3% en poids, le polymère organique étant un polymère organique filmogène et le polymère organique étant sous forme de dispersion ou de solution aqueuse,
**caractérisé en ce que** les constituants inorganiques comprennent un silicate chimiquement dissous dans la phase aqueuse, dont la solution est filmogène, **en ce que** le silicate soluble dans l'eau est contenu dans la phase aqueuse en une teneur de ≥ 3 % en poids, par rapport à sa substance sèche,
**en ce que** le polymère filmogène organique forme avec la solution de silicate une mousse de silicate-polymère lors du moussage,
**en ce que** le polymère filmogène organique et le silicate soluble dans l'eau, par rapport à leur substance sèche, sont contenus dans la phase aqueuse dans un rapport pondéral de 8:1 à 1,75:1, et
**en ce que** la teneur totale en polymère filmogène organique et en silicate hydrosoluble dans la phase aqueuse ≥ est de 20% en poids et ≤ est de 75% en poids.

2. Composition de mousse selon la revendication 1, **caractérisée en ce que** le rapport pondéral du polymère organique au silicate soluble dans l'eau, sur la base de sa teneur en matières solides, est compris entre 6:1 et 1,75:1.

3. Composition de mousse selon la revendication 1 ou 2, **caractérisée en ce que** le polymère organique comprend ou est un polymère élastomère.

4. Composition de mousse selon l'une quelconque des revendications 1 à 3, **caractérisée en ce que** le polymère comprend ou est un matériau de caoutchouc R et/ou un matériau de caoutchouc M.

5. Composition de mousse selon l'une quelconque des revendications 1 à 4, **caractérisée en ce que** le polymère organique comprend ≤ 75% en poids de polymères non élastomères, par rapport à la teneur totale en polymère organique.

6. Composition de mousse selon l'une quelconque des revendications 1 à 5, **caractérisée en ce que** le silicate soluble dans l'eau est un silicate de métal alcalin ou un mélange de ceux-ci.

7. Composition de mousse selon l'une quelconque des revendications 1 à 6, **caractérisée en ce que** la teneur en silicate soluble dans l'eau par rapport à la teneur en matières solides de la phase aqueuse est ≥ 8% en poids.

8. Composition de mousse selon l'une quelconque des revendications 1 à 7, **caractérisée en ce que** la phase aqueuse contient au moins un oligo- ou polyphosphate hydrosoluble ou des mélanges de ceux-ci.

9. Composition de mousse selon la revendication 8, **caractérisée en ce que** les oligo- ou polyphosphates sont contenus dans une teneur de ≥ 0,15 % en poids et/ou ≤ 10 % en poids par rapport à la teneur en matières solides de la phase aqueuse.

10. Composition de mousse selon l'une quelconque des revendications 1 à 9, **caractérisée en ce que** la phase aqueuse ou la mousse formée contient ≤ 30% en poids de solides inorganiques non dissoutes.

11. Composition de mousse selon l'une quelconque des revendications 1 à 10, **caractérisée en ce que** la mousse forme une mousse souple flexible lorsqu'elle est durcie.

12. Composition de mousse selon l'une quelconque des revendications 1 à 11, **caractérisée en ce qu'**elle est présente sous la forme d'une composition à un composant ou d'une composition à deux composants.

13. Procédé pour sceller des joints de construction ou pour relier des éléments de construction en utilisant une composition en mousse selon l'une des revendications 1 à 12, dans lequel la mousse est introduite dans le joint de construction ou entre les éléments de construction à relier et est ensuite durcie.

14. Structure de construction avec un joint ou constituée de plusieurs éléments de construction, **caractérisée en ce que** le joint est au moins partiellement rempli d'une composition de mousse moussée selon l'une des revendications 1 à 12 ou **en ce que** deux ou plusieurs éléments de construction sont assemblés par collage au moyen d'une composition de mousse moussée selon l'une des revendications 1 à 12.
